# EUROPEAN PATENT SPECIFICATION

(11) **EP 4 383 779 B1**
(45) Date of publication and mention of the grant of the patent: **04.02.2026**
(21) Application number: 22857561.9
(22) Date of filing: 29.07.2022
(51) Int. Cl.: H04L 67/51, H04L 41/0803

(54) **FEDERATION CONTROL NETWORK ELEMENT FOR EDGE CONFIGURATION SERVER DISCOVERY**
FÖDERATIONS-STEUERUNGS-NETZELEMENT ZUR ERMITTLUNG EINES EDGE-KONFIGURATIONSSERVERS
ÉLÉMENT DE RÉSEAU DE CONTRÔLE DE FÉDÉRATION POUR LA DÉCOUVERTE D'UN SERVEUR DE CONFIGURATION EDGE

(30) Priority: 18.08.2021 CN 202110950242
(43) Date of publication of application: 12.06.2024
(73) Proprietor: Huawei Technologies Co., Ltd., Shenzhen, Guangdong 518129 (CN)
(72) Inventor: YAO, Qi, Shenzhen, Guangdong 518129 (CN); EBRAHIM REZAGAH, Roya, Shenzhen, Guangdong 518129 (CN); ZONG, Zaifeng, Shenzhen, Guangdong 518129 (CN)
(74) Representative: Gill Jennings & Every LLP
(86) International application number: PCT/CN2022/108796
(87) International publication number: WO 2023/020249

(56) References cited:
- EP-A1- 4 167 625
- WO-A1-2021/138069
- CN-A- 111 787 038
- CN-A- 113 132 897
- CN-A- 113 840 293
- HUAWEI ET AL: "Service provisioning in roaming scenario", vol. SA WG6, no. e-meeting; 20201116 - 20201124, 11 November 2020 (2020-11-11), XP052482007, Retrieved from the Internet <URL:https://ftp.3gpp.org/tsg_sa/WG6_MissionCritical/TSGS6_040-e/Docs/S6-202185.zip S6-202185-EDGEAPP-23558-Service-provisioning-in-roaming-scenario.doc> [retrieved on 20201111]
- HUAWEI ET AL: "ACR when roaming to another PLMN", vol. SA WG6, no. e-meeting; 20201116 - 20201124, 11 November 2020 (2020-11-11), XP052482006, Retrieved from the Internet <URL:https://ftp.3gpp.org/tsg_sa/WG6_MissionCritical/TSGS6_040-e/Docs/S6-202184.zip S6-202184-EDGEAPP-23.558-ACR-when-roaming-to-another-PLMN.doc> [retrieved on 20201111]
- "3 Generation Partnership Project; Technical Specification Group Services and System Aspects; Architecture for enabling Edge Applications; (Release 17)", no. V1.1.0, 25 October 2020 (2020-10-25), pages 1 - 121, XP051961557, Retrieved from the Internet <URL:ftp://ftp.3gpp.org/Specs/archive/23_series/23.558/23558-110.zip 23558-110_cl.doc> [retrieved on 20201025]
- "3rd Generation Partnership Project; Technical Specification Group Services and System Aspects; Study on Enhanced architecture for enabling Edge Applications; (Release 18)", no. V0.3.0, 21 October 2021 (2021-10-21), pages 1 - 41, XP052082804, Retrieved from the Internet <URL:https://ftp.3gpp.org/Specs/archive/23_series/23.700-98/23700-98-030.zip 23700-98-030_cb.docx> [retrieved on 20211021]
- HUAWEI, HISILICON: "Service provisioning in roaming scenario", 3GPP DRAFT; S6-202185, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. e-meeting; 20201116 - 20201124, 11 November 2020 (2020-11-11), Mobile Competence Centre ; 650, route des Lucioles ; F-06921 Sophia-Antipolis Cedex ; France , XP051953660
- QUALCOMM INCORPORATED: "Correction of ECS Address Configuration Information - Option 2", 3GPP DRAFT; S2-2106485, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20210816 - 20210827, 10 August 2021 (2021-08-10), Mobile Competence Centre ; 650, route des Lucioles ; F-06921 Sophia-Antipolis Cedex ; France, XP052054218

## Description

### TECHNICAL FIELD

This application relates to the field of communication technologies, and more specifically, to a method, an apparatus, a computer-readable storage medium, and a system for obtaining an edge service.

### BACKGROUND

User equipment (user equipment, UE) generally uses the following solution to obtain an edge service: As a part of the UE, an edge enabler client (edge enabler client, EEC) first configures address information of an edge configuration server (edge configuration server, ECS) in the EEC, and then the EEC sends a service provisioning request (service provisioning request) or a service subscription request (service subscription update request) to the ECS to obtain address information of an edge enabler server (edge enabler server, EES). After obtaining the address information of the EES, the UE or the EEC sends an EAS discovery request (EAS discovery request) to the EES to obtain address information of an edge application server (edge application server, EAS), to further obtain an edge service.

In a conventional technology, in addition to being configured in the EEC, the address information of the ECS may also be configured in a unified data management (unified data management, UDM) network element. In a session establishment process, the UDM forwards the address information of the ECS to the UE by using a session management function (session management function, SMF).

In the foregoing case in which the address information of the ECS is preconfigured in the EEC or the UDM, if the address information of the ECS changes, or when the UE is in a roaming scenario, an ECS that the UE wants to access is different from a preconfigured ECS, or when the UE moves out of a service range of an ECS, the UE cannot obtain an edge service by using the preconfigured ECS.

Huawei et al: "Service provisioning in roaming scenario", 3GPP draft; S6-202185, 3RD Generation Partnership Project, Mobile Competence Centre; 650, Route Des Lucioles; F-06921 Sophia-Antipolis Cedex; France vol. SAWG6, no. e-meeting; 20201116 - 20201124 11 November 2020, discusses the solution to EES provisioning when UE is roaming.

Huawei et al: "ACR when roaming to another PLMN", 3GPP draft; S6-202184, 3RD Generation Partnership Project, Mobile Competence Centre; 650, Route Des Lucioles; F-06921 Sophia-Antipolis Cede; France vol. SA WG6, no. e-meeting; 20201116 - 20201124 11 November 2020, discusses the solution to application context relocation when UE is roaming.

"3 Generation Partnership Project; Technical Specification Group Service and System Aspects; Architecture for enabling Edge Applications; (Release 17)", 3GPP Standard; Technical Specification; 3GPP TS 23.558, 3RD Generation Partnership Project, Mobile Competence Centre; 650, Route Des Lucioles; F-06921 Sophia-Antipolis Cedex; France no. V1 .1.0 25 October 2020 (2020-10-25), pages 1-121, discusses application layer architecture and related procedures for enabling edge applications over 3GPP networks.

EP 4 167 625 A1, which falls under Article 54(3) EPC, discusses a communication method and an apparatus.

### SUMMARY

This application provides a method and an apparatus for obtaining an edge service, so that when configuration information of an ECS changes, or a terminal device is in a roaming scenario, or a terminal device moves out of a service range of an ECS, an edge service provided by another ECS can be obtained. Objects of the invention are a method for obtaining an edge service for a terminal device, a corresponding apparatus, a corresponding computer readable storage medium, and a corresponding system as respectively claimed in each of the appended independent claims. Preferred embodiments are covered by the appended dependent claims.

According to a first aspect, a method for obtaining an edge service is provided according to appended claim 1.

Based on the foregoing solution, the terminal device can obtain, in a roaming scenario, or in a scenario in which an ECS preconfigured for the terminal device changes or the terminal device moves out of a service range of an ECS, an ECS or an EES that can provide an edge service to the terminal device.

With reference to the first aspect, in some possible implementations, the first ECS obtains the information about the second ECS based on configuration information.

Based on the foregoing solution, the first ECS configures profiles of other ECSs, and therefore, the information about the second ECS may be obtained based on the configured profiles of the other ECSs.

The first ECS sends first request information to a federation control network element, where the first request information is used for requesting the information about the second ECS; and the first ECS receives first response information from the federation control network element, where the first response information includes the information about the second ECS.

Based on the foregoing solution, the ECS registers a profile with the federation control network element. Therefore, when determining that an EES managed by the first ECS cannot provide an edge service to the terminal device, the first ECS queries the federation control network element for an EES that can provide an edge service to the terminal device, to determine an ECS corresponding to the EES.

With reference to the first aspect, in some possible implementations, the first ECS sends second request information to the second ECS, where the second request information is used for requesting the information about the first EES; and the first ECS receives second response information from the second ECS, where the second response information includes the information about the first EES.

Based on the foregoing solution, after obtaining the information about the second ECS based on the local configuration or by querying the federation control network element, the first ECS requests, from the second ECS, an EES that can provide a service to the terminal device.

With reference to the first aspect, in some possible implementations, the first ECS receives third request information from the first device, where the third request information is used for requesting the information about the first EES; and the first ECS determines, based on the third request information, that an EES managed by the first ECS cannot provide an edge service to the terminal device.

Based on the foregoing solution, the first device may be a terminal device, an EEC, or an EES. This is not limited in this application. For example, the first device is a terminal device, and when the terminal device obtains, from a preconfigured ECS (the first ECS) or an ECS (the first ECS) delivered by a network side, an EES that can provide an edge service to the terminal device, an EES managed by the first ECS may not provide an edge service to the terminal device due to a reason such as a change in a location of the terminal device. In this case, the first ECS may obtain, through local configuration or by querying another ECS from the federation control network element, an EES that can provide an edge service to the terminal device.

With reference to the first aspect, in some possible implementations, the first request information, the second request information, or the third request information includes at least one of the following: an identifier of a public land mobile network PLMN accessed by a terminal device, an identifier of an edge computing service provider ECSP, feature information of the first EES, and application information.

According to a second aspect, a method for obtaining an edge service is provided according to appended claim 11.

With reference to the second aspect, in some possible implementations, the second request information includes at least one of the following: an identifier of a public land mobile network PLMN accessed by a terminal device, an identifier of an edge computing service provider ECSP, feature information of the first EES, application information, and location information of the terminal device.

With reference to the second aspect, in some possible implementations, the second ECS determines the information about the first EES based on the second request information and a local ECS profile, where the ECS profile includes at least one of the following: address information of the ECS, a service range of the ECS, an EES profile managed by the ECS, an identifier of an ECSP of the ECS, and an identifier of a PLMN corresponding to the ECS.

Based on the foregoing solution, the second ECS determines the information about the first EES based on the identifier of the PLMN in the second request information and the identifier of the PLMN in the ECS profile. Alternatively, the second ECS determines the information about the first EES based on the identifier of the ECSP in the second request information and the identifier of the ECSP in the ECS profile. Alternatively, the second ECS determines the information about the first EES based on the feature information of the first EES in the second request information and the EES profile managed by the ECS in the ECS profile. Alternatively, the second ECS determines the information about the first EES based on the application information in the second request information and the EES profile managed by the ECS in the ECS profile. Alternatively, the second ECS determines the information about the first EES based on the location information of the terminal device in the second request information and the service range of the ECS in the ECS profile. Certainly, the second ECS may further determine the information about the first EES based on two or more items in the second request information. This is not limited in this application.

According to a comparative example, a method for obtaining an edge service is provided. The method may be performed by a terminal device, or may be performed by a component (for example, a chip, a chip system, or the like) configured in the terminal device. This is not limited in this application. The method includes: A terminal device sends first request information to a first functional network element, where the first request information is used for requesting information about a first edge configuration server ECS, the first functional network element is a federation control network element or a first ECS discovery proxy, and the first functional network element stores information about at least one ECS. The terminal device receives first response information from the first functional network element, where the first response information includes the information about the first ECS.

Based on the foregoing solution, an ECS registers a profile with the first functional network element, so that the terminal device may obtain an ECS that can provide an edge service to the terminal device. Compared with a solution of pre-configuring an ECS in a conventional technology, in the solution provided in this application, different operators do not need to configure different ECSs for the terminal device, and all terminal devices discover an ECS by using the first functional network element. This is more flexible and has a wider application scope.

With reference to the comparative example, in some possible implementations, the terminal device obtains address information of the first functional network element.

Based on the foregoing solution, the address information of the first functional network element may be configured in the terminal device, configured in an EEC, or configured in a core network element. If the address information of the first functional network element is configured in the core network element, the core network element may deliver the address information of the first functional network element to the terminal device.

With reference to the comparative example, in some possible implementations, the first request information includes at least one of the following: an identifier of a public land mobile network PLMN accessed by a terminal device, an identifier of an edge computing service provider ECSP, and location information of the terminal device.

According to another comparative example, a method for obtaining an edge service is provided. The method may be performed by a first functional network element, or may be performed by a component (for example, a chip, a chip system, or the like) configured in the first functional network element. This is not limited in this application. The method includes: A first functional network element receives first request information from a terminal device, where the first request information is used for requesting information about a first edge configuration server ECS, the first functional network element is a federation control network element or a first ECS discovery proxy, and the first functional network element stores information about at least one ECS. The first functional network element determines the first ECS based on the first request information. The first functional network element sends first response information to the terminal device, where the first response information includes the information about the first ECS.

With reference to the comparative example, in some possible implementations, the first functional network element is a first ECS discovery proxy, the first ECS discovery proxy determines information about a second ECS discovery proxy based on the first request information and/or a local configuration, the first ECS discovery proxy sends second request information to the second ECS discovery proxy, where the second request information is used for requesting the information about the first ECS, and the first ECS discovery proxy receives second response information from the second ECS discovery proxy, where the second response information includes the information about the first ECS.

Based on the foregoing solution, an ECS discovery proxy stores profiles of a plurality of ECSs, and the ECS discovery proxy configures information of other ECS discovery proxies, so that ECS discovery proxies may interact with each other to obtain information about ECSs stored by the ECS discovery proxies.

With reference to the comparative example, in some possible implementations, the first ECS discovery proxy sends third request information to the federation control network element based on the first request information, where the third request information is used for requesting the information about the second ECS discovery proxy; and the first ECS discovery proxy receives third response information from the federation control network element, where the third response information includes the information about the second ECS discovery proxy.

Based on the foregoing solution, an ECS discovery proxy stores profiles of a plurality of ECSs, and the ECS discovery proxy registers with the federation control network element, so that the ECS discovery proxy may query the federation control network element for information about another ECS discovery proxy.

With reference to the comparative example, in some possible implementations, the first request information includes at least one of the following: an identifier of a public land mobile network PLMN accessed by a terminal device, an identifier of an edge computing service provider ECSP, and location information of the terminal device.

According to a comparative example, a method for obtaining an edge service is provided. The method may be performed by a first control-plane core network element, or may be performed by a component (for example, a chip, a chip system, or the like) configured in the first control-plane core network element. This is not limited in this application. The method includes: A first control-plane core network element in a first network receives first indication information from a second control-plane core network element in a second network, where the first indication information indicates that a terminal device supports access to an edge service in the first network. The first control-plane core network element sends first request information to a third control-plane core network element in the first network based on the first indication information, where the first request information is used for requesting information about a first edge configuration server ECS in the first network. The first control-plane core network element receives first response information from the third control-plane core network element, where the first response information includes the information about the first ECS.

In the foregoing solution, for example, the first network is a network in a visited domain, and the second network is a network in a home domain. A control-plane core network element in the network in the home domain notifies, by using indication information, a control-plane core network element in the network in the visited domain that the terminal device supports access to an edge service in the first network, to obtain information about an ECS that can provide an edge service to the terminal device in the network in the visited domain.

With reference to the comparative example, in some possible implementations, the first request information includes at least one of the following: an identifier of a public land mobile network PLMN accessed by a terminal device, an identifier of an edge computing service provider ECSP, and location information of the terminal device.

According to a comparative example, a method for obtaining an edge service is provided. The method may be performed by a third control-plane core network element, or may be performed by a component (for example, a chip, a chip system, or the like) configured in the third control-plane core network element. This is not limited in this application. The method includes: A third control-plane core network element receives first request information from a first control-plane core network element, where the first request information is used for requesting information about a first edge configuration server ECS, and the first request information includes at least one of the following: an identifier of a public land mobile network PLMN accessed by a terminal device, an identifier of an edge computing service provider ECSP, and location information of the terminal device. The third control-plane core network element determines the information about the first ECS based on the first request information, and the third control-plane core network element sends first response information to the first control-plane core network element, where the first response information includes the information about the first ECS.

With reference to the comparative example, in some possible implementations, the third control-plane core network element determines the information about the first ECS based on the identifier of the PLMN and a correspondence between the identifier of the PLMN and an ECS; and/or the third control-plane core network element determines the information about the first ECS based on the identifier of the ECSP and a correspondence between the identifier of the ECSP and an ECS; and/or the third control-plane core network element determines the information about the first ECS based on the location information of the terminal device and a service range of an ECS.

According to a third aspect, an apparatus for obtaining an edge service is provided according to appended claim 12. The apparatus may be a first ECS, or may be a component (for example, a chip, a chip system, or the like) configured in the first ECS. This is not limited in this application. The apparatus includes a transceiver unit and a processing unit. If it is determined that an EES managed by the first ECS cannot provide an edge service to a terminal device, the processing unit is configured to obtain information about a second ECS. The transceiver unit is configured to send first information to a first device, where the first information includes information about a first EES or the information about the second ECS, and the first EES is an EES managed by the second ECS.

Based on the foregoing solution, the terminal device can obtain, in a roaming scenario, or in a scenario in which an ECS preconfigured for the terminal device changes or the terminal device moves out of a service range of an ECS, an ECS or an EES that can provide an edge service to the terminal device.

With reference to the third aspect, in some possible implementations, the processing unit is configured to obtain the information about the second ECS based on configuration information.

Based on the foregoing solution, the first ECS configures profiles of other ECSs, and therefore, the information about the second ECS may be obtained based on the configured profiles of the other ECSs.

With reference to the third aspect, in some possible implementations, the transceiver unit is further configured to send first request information to a federation control network element, where the first request information is used for requesting the information about the second ECS; and the transceiver unit is further configured to receive first response information from the federation control network element, where the first response information includes the information about the second ECS.

Based on the foregoing solution, the ECS may register a profile with the federation control network element. Therefore, when determining that an EES managed by the first ECS cannot provide an edge service to the terminal device, the first ECS may query the federation control network element for an EES that can provide an edge service to the terminal device, to determine an ECS corresponding to the EES.

With reference to the third aspect, in some possible implementations, the transceiver unit is further configured to send second request information to the second ECS, where the second request information is used for requesting the information about the first EES; and the transceiver unit is further configured to receive second response information from the second ECS, where the second response information includes the information about the first EES.

Based on the foregoing solution, after obtaining the information about the second ECS based on the local configuration or by querying the federation control network element, the first ECS requests, from the second ECS, an EES that can provide a service to the terminal device.

With reference to the third aspect, in some possible implementations, the transceiver unit is further configured to receive third request information from the first device, where the third request information is used for requesting the information about the first EES; and the processing unit is further configured to determine, based on the third request information, that an EES managed by the first ECS cannot provide an edge service to the terminal device.

Based on the foregoing solution, the first device may be a terminal device, an EEC, or an EES. This is not limited in this application. For example, the first device is a terminal device, and when the terminal device obtains, from a preconfigured ECS (the first ECS) or an ECS (the first ECS) delivered by a network side, an EES that can provide an edge service to the terminal device, an EES managed by the first ECS may not provide an edge service to the terminal device due to a reason such as a change in a location of the terminal device. In this case, the first ECS may obtain, through local configuration or by querying another ECS from the federation control network element, an EES that can provide an edge service to the terminal device.

With reference to the third aspect, in some possible implementations, the first request information, the second request information, or the third request information includes at least one of the following: an identifier of a public land mobile network PLMN accessed by a terminal device, an identifier of an edge computing service provider ECSP, feature information of the first EES, and application information.

According to another comparative example, an apparatus for obtaining an edge service is provided. The apparatus may be a second ECS, or may be a component (for example, a chip, a chip system, or the like) configured in the second ECS. This is not limited in this application. The apparatus includes a transceiver unit and a processing unit. The transceiver unit is configured to receive second request information from a first ECS, where the second request information is used for requesting information about a first EES. The processing unit is configured to determine the information about the first EES based on the second request information. The transceiver unit is further configured to send second response information to the first ECS, where the second response information includes the information about the first EES.

With reference to the comparative example, in some possible implementations, the second request information includes at least one of the following: an identifier of a public land mobile network PLMN accessed by a terminal device, an identifier of an edge computing service provider ECSP, feature information of the first EES, application information, and location information of the terminal device.

With reference to the comparative example, in some possible implementations, the processing unit is further configured to determine the information about the first EES based on the second request information and a local ECS profile, where the ECS profile includes at least one of the following: address information of the ECS, a service range of the ECS, an EES profile managed by the ECS, an identifier of an ECSP of the ECS, and an identifier of a PLMN corresponding to the ECS.

Based on the foregoing solution, the second ECS determines the information about the first EES based on the identifier of the PLMN in the second request information and the identifier of the PLMN in the ECS profile. Alternatively, the second ECS determines the information about the first EES based on the identifier of the ECSP in the second request information and the identifier of the ECSP in the ECS profile. Alternatively, the second ECS determines the information about the first EES based on the feature information of the first EES in the second request information and the EES profile managed by the ECS in the ECS profile. Alternatively, the second ECS determines the information about the first EES based on the application information in the second request information and the EES profile managed by the ECS in the ECS profile. Alternatively, the second ECS determines the information about the first EES based on the location information of the terminal device in the second request information and the service range of the ECS in the ECS profile. Certainly, the second ECS may further determine the information about the first EES based on two or more items in the second request information. This is not limited in this application.

According to another comparative example, an apparatus for obtaining an edge service is provided. The apparatus may be a terminal device, or may be a component (for example, a chip, a chip system, or the like) configured in the terminal device. This is not limited in this application. The apparatus includes a transceiver unit. The transceiver unit is configured to send first request information to a first functional network element, where the first request information is used for requesting information about a first edge configuration server ECS, the first functional network element is a federation control network element or a first ECS discovery proxy, and the first functional network element stores information about at least one ECS. The transceiver unit is further configured to receive first response information from the first functional network element, where the first response information includes the information about the first ECS.

Based on the foregoing solution, an ECS registers a profile with the first functional network element, so that the terminal device may obtain an ECS that can provide an edge service to the terminal device. Compared with a solution of pre-configuring an ECS in a conventional technology, in the solution provided in this application, different operators do not need to configure different ECSs for the terminal device, and all terminal devices discover an ECS by using the first functional network element. This is more flexible and has a wider application scope.

With reference to the comparative example, in some possible implementations, the apparatus further includes a processing unit, and the processing unit is configured to obtain address information of the first functional network element.

Based on the foregoing solution, the address information of the first functional network element may be configured in the terminal device, configured in an EEC, or configured in a core network element. If the address information of the first functional network element is configured in the core network element, the core network element may deliver the address information of the first functional network element to the terminal device.

With reference to the comparative example, in some possible implementations, the first request information includes at least one of the following: an identifier of a public land mobile network PLMN accessed by a terminal device, an identifier of an edge computing service provider ECSP, and location information of the terminal device.

According to another comparative example, an apparatus for obtaining an edge service is provided. The apparatus may be a first functional network element, or may be a component (for example, a chip, a chip system, or the like) configured in the first functional network element. This is not limited in this application. The apparatus includes a transceiver unit and a processing unit. The transceiver unit is configured to receive first request information from a terminal device, where the first request information is used for requesting information about a first edge configuration server ECS, the first functional network element is a federation control network element or a first ECS discovery proxy, and the first functional network element stores information about at least one ECS. The processing unit is configured to determine the first ECS based on the first request information. The transceiver unit is further configured to send first response information to the terminal device, where the first response information includes the information about the first ECS.

With reference to the comparative example, in some possible implementations, the first functional network element is a first ECS discovery proxy, the processing unit is further configured to determine information about a second ECS discovery proxy based on the first request information and/or a local configuration, the transceiver unit is further configured to send second request information to the second ECS discovery proxy, where the second request information is used for requesting the information about the first ECS, and the transceiver unit is further configured to receive second response information from the second ECS discovery proxy, where the second response information includes the information about the first ECS.

Based on the foregoing solution, an ECS discovery proxy stores profiles of a plurality of ECSs, and the ECS discovery proxy configures information of other ECS discovery proxies, so that ECS discovery proxies may interact with each other to obtain information about ECSs stored by the ECS discovery proxies.

With reference to the comparative example, in some possible implementations, the processing unit is configured to control the transceiver unit to send third request information to the federation control network element based on the first request information, where the third request information is used for requesting the information about the second ECS discovery proxy; and the transceiver unit is further configured to receive third response information from the federation control network element, where the third response information includes the information about the second ECS discovery proxy.

Based on the foregoing solution, an ECS discovery proxy stores profiles of a plurality of ECSs, and the ECS discovery proxy registers with the federation control network element, so that the ECS discovery proxy may query the federation control network element for information about another ECS discovery proxy.

With reference to the comparative example, in some possible implementations, the first request information includes at least one of the following: an identifier of a public land mobile network PLMN accessed by a terminal device, an identifier of an edge computing service provider ECSP, and location information of the terminal device.

According to another comparative example, an apparatus for obtaining an edge service is provided. The apparatus may be a first control-plane core network element, or may be a component (for example, a chip, a chip system, or the like) configured in the first control-plane core network element. This is not limited in this application. The apparatus includes a transceiver unit and a processing unit. The transceiver unit is configured to receive first indication information from a second control-plane core network element in a second network, where the first indication information indicates that a terminal device supports access to an edge service in the first network. The processing unit is configured to control the transceiver unit to send first request information to a third control-plane core network element in the first network based on the first indication information, where the first request information is used for requesting information about a first edge configuration server ECS in the first network. The transceiver unit is further configured to receive first response information from the third control-plane core network element, where the first response information includes the information about the first ECS.

In the foregoing solution, for example, the first network is a network in a visited domain, and the second network is a network in a home domain. A control-plane core network element in the network in the home domain notifies, by using indication information, a control-plane core network element in the network in the visited domain that the terminal device supports access to an edge service in the first network, to obtain information about an ECS that can provide an edge service to the terminal device in the network in the visited domain.

With reference to the other comparative example, in some possible implementations, the first request information includes at least one of the following: an identifier of a public land mobile network PLMN accessed by a terminal device, an identifier of an edge computing service provider ECSP, and location information of the terminal device.

According to another comparative example, an apparatus for obtaining an edge service is provided. The apparatus may be a third control-plane core network element, or may be a component (for example, a chip, a chip system, or the like) configured in the third control-plane core network element. This is not limited in this application. The apparatus includes a transceiver unit and a processing unit. The transceiver unit is configured to receive first request information from a first control-plane core network element, where the first request information is used for requesting information about a first edge configuration server ECS, and the first request information includes at least one of the following: an identifier of a public land mobile network PLMN accessed by a terminal device, an identifier of an edge computing service provider ECSP, and location information of the terminal device. The processing unit is configured to determine the information about the first ECS based on the first request information. The transceiver unit is further configured to send first response information to the first control-plane core network element, where the first response information includes the information about the first ECS.

With reference to the comparative example, in some possible implementations, the processing unit is further configured to determine the information about the first ECS based on the identifier of the PLMN and a correspondence between the identifier of the PLMN and an ECS; and/or the processing unit is further configured to determine the information about the first ECS based on the identifier of the ECSP and a correspondence between the identifier of the ECSP and an ECS; and/or the processing unit is further configured to determine the information about the first ECS based on the location information of the terminal device and a service range of an ECS.

According to another comparative example, a communication apparatus is provided. The apparatus includes a processor. The processor is coupled to a memory, and may be configured to execute instructions in the memory, to implement the method according to any one of the first aspect to the second aspect or the possible implementations of the first aspect to the second aspect. Optionally, the apparatus further includes the memory, and the memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a chip configured in a first ECS, a second ECS, or a terminal device. When the apparatus is a chip configured in the first ECS, the second ECS, or the terminal device, the communication interface may be an input/output interface, an interface circuit, an output circuit, an input circuit, a pin, a related circuit, or the like on the chip or a chip system. The processor may be alternatively a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to another comparative example, a communication apparatus is provided. The apparatus includes a processor. Optionally, the apparatus further includes the memory, and the memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a chip configured in a first functional network element, a first control-plane core network element, or a third control-plane core network element. When the apparatus is a chip configured in a first functional network element, a first control-plane core network element, or a third control-plane core network element, the communication interface may be an input/output interface, an interface circuit, an output circuit, an input circuit, a pin, a related circuit, or the like on the chip or a chip system. The processor may be alternatively a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to another comparative example, a computer program product is provided. The computer program product includes a computer program (which may also be referred to as code or instructions). When the computer program is run, a computer is enabled to perform the method according to any one of the first aspect to the sixth aspect and the possible implementations of the first aspect to the sixth aspect.

According to a fourth aspect, a computer-readable storage medium is provided according to appended claim 13. The computer-readable storage medium stores a computer program (which may also be referred to as code or instructions). When the computer program is run on a computer, the computer is enabled to perform the method according to any one of the first aspect to the sixth aspect and the possible implementations of the first aspect to the sixth aspect.

### BRIEF DESCRIPTION OF DRAWINGS

FIG. 1 is a diagram of a system architecture to which an embodiment of this application is applicable;
FIG. 2 is a schematic diagram of an edge service architecture according to an embodiment of this application;
FIG. 3 to FIG. 11 are interaction flowcharts of a method for obtaining an edge service according to this application;
FIG. 12 is a schematic block diagram of a communication apparatus according to an embodiment of this application;
FIG. 13 is a schematic block diagram of another communication apparatus according to an embodiment of this application;
FIG. 14 is a schematic diagram of a structure of a communication apparatus according to an embodiment of this application; and
FIG. 15 is a schematic diagram of a structure of another communication apparatus according to an embodiment of this application.

### DESCRIPTION OF EMBODIMENTS

The following describes technical solutions of this application with reference to the accompanying drawings.

A wireless communication system mentioned in embodiments of this application includes, but is not limited to, a global system for mobile communications (global system for mobile communications, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 6G communication system), a system integrating a plurality of access systems, or an evolved system.

The technical solutions provided in this application may be further applied to machine type communication (machine type communication, MTC), machine-to-machine communication long term evolution technology (Long Term Evolution-machine, LTE-M), a device to device (device to device, D2D) network, a machine to machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

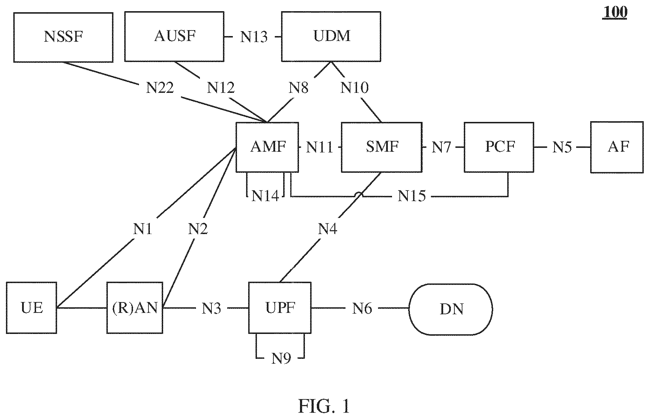

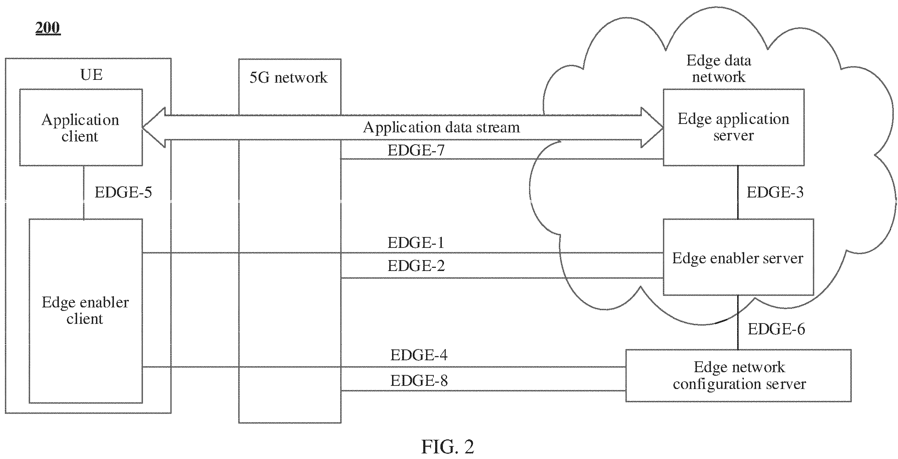

Refer to FIG. 1 and FIG. 2. The following describes in detail a network system architecture and an edge service architecture in the architecture in embodiments of this application.

FIG. 1 is a diagram of a system architecture 100 to which an embodiment of this application is applicable. As shown in the figure, the network architecture 100 may specifically include the following network elements.
1. Radio access network (radio access network, RAN): An access network that implements a network access function based on a wireless communication technology may be referred to as a radio access network. The radio access network can manage radio resources, provide an access service to a terminal, and further complete forwarding of a control signal and user data between a terminal and a core network.

The radio access network may be, for example, a base transceiver station (base transceiver station, BTS) in a global system for mobile communications (global system for mobile communications, GSM) or code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, an in-vehicle device, a wearable device, a network device in a future 5G network, or a network device in a future evolved PLMN network. This is not limited in embodiments of this application.
2. Authentication server function (authentication server function, AUSF) network element: The AUSF network element is mainly used for user authentication and the like.
3. Access and mobility management function network element (access and mobility management function, AMF): The AMF network element is mainly used for mobility management, access management, and the like, and may be used to implement a function other than session management in functions of a mobility management entity (mobility management entity, MME), for example, a function of lawful interception, access authorization (or authentication), or the like. In embodiments of this application, the AMF entity may be configured to implement functions of an access and mobility management network element.
4. Session management function network element (session management function, SMF): The SMF network element is used for session management, allocation and management of IP addresses of terminal devices, selection and management of a user plane function, policy control, a termination point of a charging function interface, downlink data notification, and the like. In embodiments of this application, the SMF entity may be configured to implement functions of a session management network element.
5. Policy control function network element (policy control function, PCF): The PCF network element is a unified policy framework used for guiding network behavior, and provides policy rule information and the like for control-plane function network elements (for example, the AMF network element, the SMF network element, or the like).
6. Application function network element (application function, AF): The AF network element is configured to perform data routing affected by an application, access a network exposure function network element, or interact with a policy framework to perform policy control, or the like.
7. Unified data management network element (unified data management, UDM): The UDM network element is used for unified data management, 5G subscriber data management, subscriber identity processing, access authentication, registration, mobility management, and the like.
8. User plane function network element (user plane function, UPF): The UPF network element is used for packet routing and forwarding, quality of service (quality of service, QoS) processing of user plane data, and the like. User data may be accessed to a data network (data network, DN) through this network element. In embodiments of this application, the UPF network element may be configured to implement functions of a user plane network element.
9. Network slice selection function network element (network slice selection function, NSSF): The NSSF network element is configured to manage information related to a network slice.
10. Data network (digital network, DN): The DN is a network that provides data transmission, for example, an operator service network, an internet (internet), a third-party service network, or the like.
11. User equipment (user equipment, UE): The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a wearable device, a terminal in a 5G network, a terminal in a future evolved network, or the like.

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In a future communication system, for example, a 6G communication system, the network elements or the devices may still use names of the network elements or the devices in the 5G communication system, or may have other names. This is not limited in embodiments of this application. Functions of the foregoing network elements or devices may be completed by an independent network element, or may be completed by several network elements together. During actual deployment, network elements in a core network may be deployed on a same physical device or different physical devices. For example, in a possible deployment, an AMF and an SMF may be deployed on a same physical device. For another example, a network element of a 5G core network and a network element of a 4G core network may be deployed on a same physical device. This is not limited in embodiments of this application.

It may be understood that FIG. 1 is merely an example, and does not constitute any limitation on the protection scope of this application. A communication method provided in this embodiment of this application may further relate to a network element that is not shown in FIG. 1. Certainly, the communication method provided in this embodiment of this application may include only some network elements shown in FIG. 1.

In addition, the network architecture further includes a network repository function network element (network function (NF) repository function, NRF), configured to store a network function entity and description information of a service provided by the network function entity, and support service discovery, network element entity discovery, and the like. A network exposure function network element (network exposure function, NEF) is configured to securely expose, to the outside, a service, a capability, and the like that are provided by a third generation partnership project (3GPP) network function. Unified data repository function (unified data repository, UDR) is used for a UDM to store subscription data or read subscription data and for a PCF to store policy data or read policy data.

It should be noted that the network system architecture in this application may further include an edge configuration server (edge configuration server, ECS) network element. The ECS network element may be a global management network element, and maintains information about each edge data network (edge data network, EDN), including a service range of the edge data network, an address of an edge enabler server (edge enabler server, EES) in the edge data network, and the like. The service range of the edge data network may be topology address information (for example, a Cell ID, a TAI (Tracking area id) and the like) or geometric address information (for example, information such as province, city, district, longitude and latitude, or the like), and the service range may be a set of address information. In an implementation, ECS network elements are deployed in a distributed manner, that is, each ECS may manage edge data networks in different areas. It should be understood that the ECS network element may be co-located with another network element, or may be an independent network element. A deployment status of the ECS network element in the network architecture is not limited in this application.

It should be noted that the network system architecture in this application may further include an edge enabler server (edge enabler server, EES) network element. The EES network element may be a control network element or a management network element in a mobile edge computing (mobile edge computing, MEC) node (which may also be referred to as multi-access edge computing (multi-access edge computing)), and is responsible for managing basic functions such as registration, domain name system (domain name system, DNS) resolution content routing selection, upper-layer application registration management, wireless information exchange, and the like of each EAS deployed in the EDN. In addition, the EES may invoke a capability exposure function network element in a 3GPP network. It should be understood that the EES network element may be co-located with another network element, or may be an independent network element. A deployment status of the EES network element in the network architecture is not limited in this application.

In this network architecture, an N2 interface is an interface between the RAN and the AMF network element, and is used to send a non-access stratum (non-access stratum, NAS) message and the like. An N3 interface is an interface between the RAN and the UPF network element, and is used to transmit user plane data, and the like. An N4 interface is an interface between the SMF network element and the UPF network element, and is used to transmit information such as tunnel identification information of an N3 connection, data buffer indication information, a downlink data notification message, and the like.

It should be understood that the foregoing network architecture applied to embodiments of this application is merely an example of a network architecture described from the perspective of a conventional point-to-point architecture and a service architecture, and a network architecture applicable to embodiments of this application is not limited thereto. Any network architecture that can implement functions of the foregoing network elements is applicable to embodiments of this application.

It should be understood that names of interfaces between the foregoing network elements in FIG. 1 are only examples, and the interfaces may have other names during specific implementation. This is not specifically limited in this application. In addition, names of messages (or signaling) transmitted between the foregoing network elements are merely examples, and do not constitute any limitation on functions of the messages.

FIG. 2 is a schematic diagram of an edge service architecture according to an embodiment of this application. As shown in the figure, a network architecture 200 may specifically include an edge data network (edge data network, EDN). The EDN may be a local data center. An EDN includes an edge enabler server (edge enabler server, EES) and a plurality of edge application servers (edge application server, EAS). Each EDN has a specific service range. The EES may be a control network element or a management network element in a mobile edge computing (mobile edge computing, MEC) node (which may also be referred to as multi-access edge computing (multi-access edge computing)), and is responsible for managing basic functions such as registration, domain name system (domain name system, DNS) resolution content routing selection, upper-layer application registration management, wireless information exchange, and the like of each EAS deployed in the EDN. In addition, the EES may invoke a capability exposure function network element in a 3GPP network. An edge data network configuration server (edge data network configuration server, EDNCS) or an edge configuration server (edge configuration server, ECS) may be a global management network element that maintains information of each EDN, the information including a service range, an EES address, and the like. It should be noted that in some standard protocols such as technical specifications (technical specification, TS) 23.501, TS 23.502, and the like, the foregoing EES, EAS, ECS, and the like may all be referred to as AFs (application function). Details are not described below again.

User equipment (user equipment, UE) may include an edge enabler client (edge enabler client, EEC) and an application client. The EEC provides necessary support for the application client on a terminal. Functions of the EEC include: retrieving EDN information by using the EDGE-4, registering the UE with the EES, retrieving an available EAS, notifying the EEC of an EAS availability change, and notifying the EEC of EAS migration.

An EDGE-8 reference point in FIG. 2 supports interaction between the edge configuration server and a core network, and supports: (1) access to a core network function and an application programming interface (application programming interface, API) for retrieving network capability information; (2) sending of service provisioning notifications to the core network (for example, an SMF). EDGE-1: EDGE-1 is an interface between the EES and the EEC, and supports registration/deregistration of the EEC in the EES and discovery of an edge application server in the edge data network. EDGE-2: EDGE-2 is an interface between the EES and a 3GPP core network, and is used for the EES to obtain 3GPP network capabilities. EDGE-3: EDGE-3 is an interface between the EES and an EAS. The EES can register with or deregister from the EAS, including the EAS availability information, service range information, address information, and the like. The EES provides the EAS with 3GPP network capability information (for example, location information). EDGE-4: EDGE-4 is an interface between the EEC and the ECS, and supports provision/push of configuration information to the EEC by the ECS. EDGE-5: EDGE-5 is an interface between the AC and EEC, and supports obtaining of EAS information from the EEC by the AC. EDGE-6: EDGE-6 is an interface between the ECS and the EES, and supports configuration of information about the EES in the ECS. EDGE-7: EDGE-7 is an interface between the EAS and a 3GPP core network, and supports obtaining of 3GPP network capabilities by the EAS. EDGE-8: EDGE-8 is an interface between the ECS and a 3GPP core network, and supports obtaining of 3GPP network capabilities by the ECS. EDGE-9: EDGE-9 is an interface between different EESs across MEC nodes/within a same MEC node and supports application migration.

In a conventional technology, in a preconfiguration manner, an ECS is preconfigured in a terminal device, or an ECS is preconfigured in an EEC, or an ECS is preconfigured in a UDM.

The terminal device generally uses the following solution to obtain an edge service: As a part of the UE, an edge enabler client EEC sends a service provisioning request (service provisioning request) or a service subscription request (service subscription update request) to the ECS to obtain address information of an EES. After obtaining the address information of the EES, the UE or the EEC sends an EAS discovery request (EAS discovery request) to the EES to obtain address information of an edge application server (EAS), to further obtain an edge service.

In the foregoing solution of preconfiguring an ECS, if information about the ECS changes, and an ECS to be accessed is different from a configured ECS, the UE cannot obtain an edge service by using the preconfigured ECS. In this case, because a preconfiguration process is generally static and is performed only once, if the information about the preconfigured ECS needs to be updated, it is difficult to obtain an edge service by using the updated ECS information, and implementation is difficult. The reason is that it may be necessary to reinstall software or restart the terminal device to update the information about the preconfigured ECS.

If there are a plurality of ECSs or UEs in a roaming scenario, configuring a plurality of ECSs in the UDM may cause overload of the UDM. In addition, in a conventional technology, the UDM configures only configuration information of an ECS in a home domain. In this case, if the terminal device moves to a coverage area of a network in a visited domain, the terminal device cannot obtain an edge service by using the preconfigured configuration information of the ECS in the home domain, and the terminal device cannot obtain the configuration information of the ECS in the visited domain. Therefore, the terminal device cannot obtain an edge service by using the configuration information of the ECS in the visited domain.

This application provides a method for obtaining an edge service, so that after an ECS that a terminal device wants to access changes, the terminal device can obtain an ECS that can provide an edge service to the terminal device.

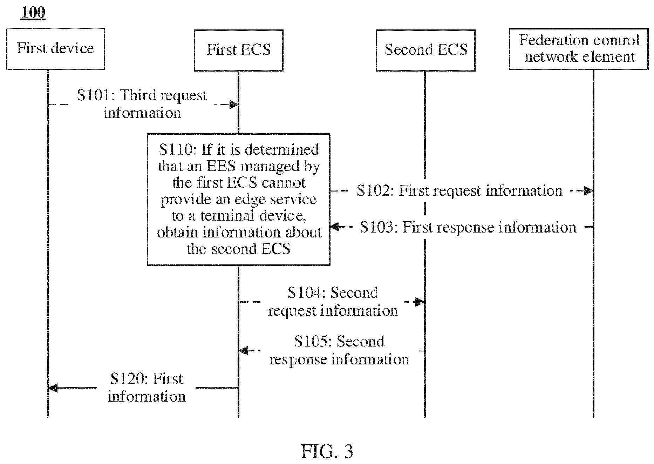

FIG. 3 is an interaction flowchart of a method for obtaining an edge service according to this application. A method 100 shown in FIG. 3 includes the following steps.

Step S110: If a first edge configuration server ECS determines that an EES managed by the first ECS cannot provide an edge service to a terminal device, the first ECS obtains information about a second ECS. Alternatively, a first ECS determines that the first ECS cannot provide an edge service to a terminal device, and the first ECS obtains information about a second ECS.

An EES registers an EES profile (profile) with an ECS. If an EES is registered with an ECS, it may be considered that the EES is managed by the ECS. In other words, an EES managed by the first ECS may be understood as an EES registered with the first ECS. The EES profile may include at least one of the following: an identifier of the EES, endpoint information (endpoint) of the EES, information about a registered EAS, edge computing service provider (edge computing service provider, ECSP) information, a service range of the EES, and a data network access identifier (data network access identifier, DNAI) associated with the EES. It should be understood that in this application, an EES managed by the first ECS can provide an edge service to the terminal device, and the EES needs to manage or register information about an EAS that the terminal device wants to access. If the information about the EAS that the terminal device wants to access is not registered in the EES, even if the service range of the EES or a service range of another registered EAS includes a location area in which the terminal device is located, it is considered that an EES managed by the first ECS cannot provide an edge service to the terminal device. In an implementation, the EAS is registered with the EES, and the EES is registered with the ECS. Therefore, the ECS may determine EASs managed by an EES managed by the ECS.

The determining, by the first ECS, that an EES managed by the first ECS cannot provide an edge service to the terminal device may be classified into the following cases:
Case 1: The first ECS determines that an EES managed by the first ECS cannot provide an edge service to the terminal device. For example, if a location of the terminal device is an area 1, and a service range of an EES managed by the first ECS does not include the area 1, the first ECS determines that an EES managed by the first ECS cannot provide an edge service to the terminal device. The first ECS may manage a plurality of EESs, and none of service ranges of the EESs includes the area 1.
Case 2: The first ECS determines that the first ECS cannot provide an edge service to the terminal device. For example, if an identifier of an ECSP requested by the terminal device is ECSP_1, and an ECSP corresponding to the first ECS is ECSP_2, or an ECSP corresponding to an EES managed by the first ECS is ECSP_2, the first ECS determines that the first ECS cannot provide an edge service to the terminal device. Alternatively, if the terminal device accesses PLMN_1, and an ECSP corresponding to the first ECS is PLMN_2, or an ECSP corresponding to an EES managed by the ECS is PLMN_2, the first ECS determines that the first ECS cannot provide an edge service to the terminal device. In another example, if a location of the terminal device is an area 1, and a service range of the first ECS does not include the area 1, the first ECS determines that the first ECS cannot provide an edge service to the terminal device. A service range of the ECS may specifically include one or more service areas, or may be a set of service ranges of EESs managed by the ECS.
Case 3: Although an EES managed by the first ECS can provide an edge service to the terminal device, quality of service may not be optimal. The first ECS may attempt to obtain, from the second ECS, information about an EES managed by the second ECS, to determine an optimal EES to provide an edge service to the terminal device. For example, a location of the terminal device is an area 1, and a service range of an EES managed by the first ECS includes the area 1, but the first ECS may still search the second ECS and obtain information about an EES from the second ECS. In an implementation, the first ECS determines, by using subscription data of the terminal device (for example, the terminal device subscribes to both the first ECS and the second ECS), that the terminal device may access the second ECS, and the first ECS attempts to obtain, from the second ECS, information about an EES managed by the second ECS. Optionally, the first ECS determines an optimal EES from an EES managed by the first ECS and an EES managed by the second ECS to provide a service to the UE.
Case 4: Although the service range of an EES managed by the first ECS includes the location of the terminal device being the area 1, information about the EAS that the terminal device wants to access is not managed or registered on the EES.

It should be understood that the first edge configuration server ECS determines that an EES managed by the first ECS cannot provide an edge service to the terminal device, which may also be understood as that the first ECS determines that no EAS can provide an edge service to the terminal device, that is, may be the case 1, or may be the case 2, the case 3, or the case 4. It is the same with the following case that the first ECS determines that an EES managed by the first ECS cannot provide an edge service to the terminal device, and details are not described below.

Optionally, the method 100 further includes the following step:
Step S101: A first device sends third request information to the first ECS, where the third request information is used for requesting information about the first EES. Correspondingly, the first ECS receives the third request information.

For example, the third request information may be a service provisioning request (service provisioning request), or may be an EES discovery request (EES discovery request). Specific information or a message name is not limited in this application. Information or message names that appear below are also merely examples, and do not constitute any limitation on this application.

Optionally, the third request information includes at least one of the following: an identifier of a public land mobile network (public land mobile network, PLMN) accessed by the terminal device, an identifier of an edge computing service provider (edge computing service provider, ECSP), location information of the terminal device, feature information (which may be any one or more items in the foregoing EES profile) of an EES or feature information of an EAS, and information about a requested application.

After receiving the third request information, the first ECS determines, based on the third request information, that an EES managed by the first ECS cannot provide an edge service to the terminal device (that is, EESs managed by the first ECS do not include the first EES, to determine that an EES managed by the first ECS cannot provide an edge service to the terminal device). Alternatively, the first ECS attempts to obtain, from the second ECS, information about an EES managed by the second ECS, to determine an optimal EES to provide an edge service to the terminal device.

For example, the first ECS determines, based on the identifier of the PLMN accessed by the terminal device, that an EES managed by the first ECS cannot provide an edge service to the terminal device. For example, if the terminal device accesses PLMN_1, and an ECSP corresponding to the first ECS is PLMN_2, or an ECSP corresponding to an EES managed by the first ECS is PLMN_2, the first ECS determines that an EES managed by the first ECS cannot provide an edge service to the terminal device.

Alternatively, the first ECS determines, based on an identifier of an ECSP accessed by the terminal device, that an EES managed by the first ECS cannot provide an edge service to the terminal device. For example, if an identifier of an ECSP requested by the terminal device is ECSP_1, and an ECSP corresponding to the first ECS is ECSP_2, or an ECSP corresponding to an EES managed by the first ECS is ECSP_2, the first ECS determines that an EES managed by the first ECS cannot provide an edge service to the terminal device.

Alternatively, the first ECS determines, based on the location information of the terminal device, that an EES managed by the first ECS cannot provide an edge service to the terminal device. For example, if the location information of the terminal device is location_1, but the service range of the first ECS does not include location_1, or a service range corresponding to an EES managed by the first ECS does not include location_1, the first ECS determines that an EES managed by the first ECS cannot provide an edge service to the terminal device.

Alternatively, the first ECS determines, based on the feature information of the EES, that an EES managed by the first ECS cannot provide an edge service to the terminal device. For example, if the terminal device or an EES requests an EES with an identifier of an ECSP being ECSP_1, and an ECSP corresponding to the first ECS is ECSP_2, or an ECSP corresponding to an EES managed by the first ECS is ECSP_2, the first ECS determines that an EES managed by the first ECS cannot provide an edge service to the terminal device.

It should be understood that the first ECS may also determine, based on two or more of the identifier of the PLMN accessed by the terminal device, the identifier of the ECSP, the location information of the terminal device, and the feature information of the EES, that an EES managed by the first ECS cannot provide an edge service to the terminal device. This is not limited in this application.

The first ECS may obtain the information about the second ECS in at least one of the following manners:

### Manner 1:

Optionally, the first ECS obtains the information about the second ECS based on configuration information.

In an implementation, the first ECS is configured with a profile (profile) of another ECS. When the first ECS determines that an EES managed by the first ECS cannot provide an edge service to the terminal device, or the first ECS attempts to obtain, from the second ECS, information about an EES managed by the second ECS, to determine an optimal EES to provide an edge service to the terminal device, the first ECS may obtain the information about the second ECS based on the locally configured profile of the another ECS, and an EES managed by the second ECS can provide an edge service to the terminal device.

Optionally, the ECS profile includes one or more of address or endpoint information of the ECS, a service range of the ECS, an EES profile managed by the ECS, an identifier of an ECSP of the ECS, and an identifier of a PLMN corresponding to the ECS. Content specifically included in the ECS profile mentioned below is the same as that described above, and details are not described in the following description. A service range of the ECS may specifically include one or more service areas, or may be a set of service ranges of EESs managed by the ECS. The first ECS determines the second ECS based on the third request information and/or the ECS profile stored/configured in the first ECS.

For example, if a location corresponding to the location information of the terminal device in the third request information is within a service range of the second ECS or within a service range of an EES managed by the second ECS, the first ECS obtains the information about the second ECS.

Alternatively, if the identifier of the ECSP in the third request information is the same as an identifier of an ECSP of the second ECS, the first ECS obtains the information about the second ECS.

Alternatively, if the identifier of the PLMN in the third request information is the same as an identifier of a PLMN of the second ECS, the first ECS obtains the information about the second ECS.

Alternatively, if the feature information of the EES in the third request information matches an EES managed by the second ECS, the first ECS obtains the information about the second ECS.

### Manner 2:

The ECS profile is stored or configured in a federation control network element.

Optionally, the method 100 further includes the following steps:
Step S102: The first ECS sends first request information to a federation control network element, where the first request information is used for requesting the information about the second ECS. Correspondingly, the federation control network element receives the first request information. The federation control network element supports a function of discovering an ECS. A name of the network element is not limited in this application. The network element may also be referred to as a federation management network element, an ECS discovery network element, or the like. The federation control network element may be an independent network element, or may be integrated into another network element, for example, may be integrated into an NRF or a UDM. This is not limited in this application.
Step S103: The federation control network element sends first response information to the first ECS, where the first response information includes the information about the second ECS. The corresponding first ECS receives the first response information.

Specifically, when the first ECS determines, based on the third request information, that an EES managed by the first ECS cannot provide an edge service to the terminal device, or when the first ECS attempts to obtain, from the second ECS, information about an EES managed by the second ECS, to determine an optimal EES to provide an edge service to the terminal device, the first ECS sends the first request information to the federation control network element, to obtain the information about the second ECS. The first request information includes at least one of the following: an identifier of a PLMN accessed by the terminal device, an identifier of an ECSP, location information of the terminal device, feature information of an EES or an EAS, and application information.

It should be understood that the ECS may register a profile with or send a profile to the federation control network element. Therefore, when the first ECS determines that an EES managed by the first ECS cannot provide an edge service to the terminal device, or when the first ECS attempts to obtain, from the second ECS, information about an EES managed by the second ECS, to determine an optimal EES to provide an edge service to the terminal device, the first ECS may query, from the federation control network element, an ECS that can provide an edge service to the terminal device, or an ECS that corresponds to/is registered with an EES that can provide an edge service to the terminal device. A method for querying/determining the information about the second ECS by the federation control network element includes, but is not limited to, the following:
if a location corresponding to the location information of the terminal device in the first request information is within a service range of the second ECS or within a service range of an EES managed by the second ECS, determining, by the federation control network element, that the second ECS is an ECS that can provide an edge service to the terminal device; or
if the identifier of the ECSP in the first request information is the same as an identifier of an ECSP of the second ECS, determining, by the federation control network element, that the second ECS is an ECS that can provide an edge service to the terminal device; or
if the identifier of the PLMN in the first request information is the same as an identifier of a PLMN of the second ECS, determining, by the federation control network element, that the second ECS is an ECS that can provide an edge service to the terminal device; or
if the feature information of the EES in the first request information matches an EES managed by the second ECS, determining, by the federation control network element, that the second ECS is an ECS that can provide an edge service to the terminal device.

After determining the second ECS, the federation control network element sends the information about the second ECS to the first ECS.

Optionally, local policy information is stored or preconfigured in the first ECS. The local policy information includes that the first ECS may obtain, from the second ECS, information about an EES managed by the second ECS (refer to the case 3 in step S110), to determine an optimal EES to provide an edge service to the terminal device. For example, the first ECS determines, by using subscription data of the terminal device (for example, the terminal device subscribes to both the first ECS and the second ECS), that the terminal device may access the second ECS, and the first ECS attempts to obtain, from the second ECS, information about an EES managed by the second ECS.

Specifically, the first ECS first determines, based on the local policy information, that it is necessary to search for a second ECS, and then determines a second ECS in the foregoing manner 1 or manner 2.

Optionally, after the first ECS obtains the information about the second ECS, the method 100 further includes the following steps.

Step S104: The first ECS sends second request information to the second ECS, where the second request information is used for requesting the information about the first EES. Correspondingly, the second ECS receives the second request information.

Step S105: The second ECS sends second response information to the first ECS, where the second response information includes the information about the first EES. The corresponding first ECS receives the second response information.

Optionally, the second request information includes at least one of the following: an identifier of a PLMN accessed by the terminal device, an identifier of an ECSP, location information of the terminal device, feature information of an EES or an EAS, and application information.

Optionally, that the second ECS determines the first EES based on the second request information and/or the EES profile stored in the ECS includes at least one of the following:
determining, by the second ECS, the first EES based on the identifier of the PLMN accessed by the terminal device and the identifier of the PLMN of the EES profile;
determining, by the second ECS, the first EES based on the identifier of the ECSP in the second request and information of the ECSP in the EES profile;
determining, by the second ECS, the first EES based on the location information of the terminal device and information about the service range in the EES profile, where the location information of the terminal device may be included in the second request information, or may be obtained by the second ECS from a 5GC.

Step S120: The first ECS sends first information to the first device, where the first information includes information about the first EES or the information about the second ECS, and the first EES is an EES managed by the second ECS. Correspondingly, the first device receives the first information.

It should be understood that the first device may be UE, an EEC, or an EES. This is not limited in this application. When the first information sent by the first ECS to the first device is the information about the first EES, the first device may directly determine the first EES. When the first information sent by the first ECS to the first device is the information about the second ECS, the first device may send fifth request information to the second ECS, to obtain the information about the first EES through fifth response information from the second ECS. Specific content and a function of the fifth request information is similar to those of the third request information, and details are not described herein again. After receiving the information about the first EES, the EEC may send an EAS discovery request to the first EES to obtain address information of the EAS, to access an edge service.

It should be further understood that the information about the ECS described above may be a uniform resource identifier (uniform resource identifier, URI), an internet protocol (internet protocol, IP) address, or a fully qualified domain name (fully qualified domain name, FQDN) of the ECS. This is not limited in this application. The UE may establish a connection with the ECS based on the information about the ECS. The information about the EES may be information such as a URI, an IP address, an FQDN, or the like of the EES. This is not limited in this application either. Content specifically included in the information about the ECS and the information about the EES mentioned below is the same as that described above, and details are not described in the following description.

The following describes a method for obtaining an edge service by using the method 100 in a specific scenario.

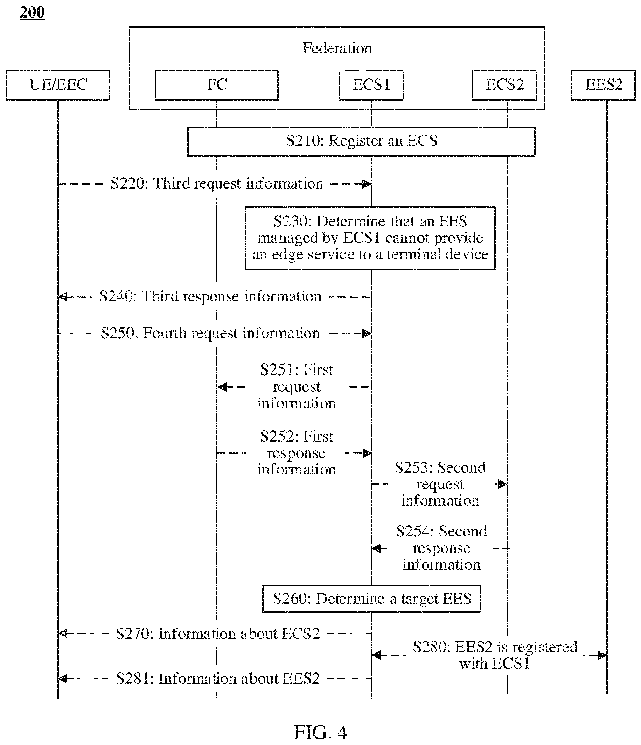

FIG. 4 is an interaction flowchart of a method for obtaining an edge service in a federation scenario according to this application. An application scenario of a method 200 shown in FIG. 4 is a federation (Federation) scenario. To be specific, a plurality of ECSPs and/or a plurality of PLMNs form a federation. When a terminal device is in a roaming scenario, for example, home routed (home routed) or local breakout (local breakout), the terminal device may obtain an edge service by using the method 200. When the terminal device is in a non-roaming scenario, the terminal device may also obtain an edge service by using the method 200. The method 200 includes the following steps:

Step S210: One or more ECSs (ECS1 and ECS2 are used as an example in FIG. 4) register an ECS profile with a federation control network element (federation controller, FC), where an FC is a logical network element and may be integrated into an existing functional network element. For example, the FC is integrated into an NRF, an ECS, a UDR, or a UDM. The FC may also have another name, for example, a federation management network element (federation manager, FM) or an edge computing federation management network element (MEC federation manager, MEFM). This is not limited in this application.

Alternatively, each ECS is configured with a profile of another ECS, for example, ECS1 is configured with a profile of ECS2, and ECS2 is configured with a profile of ECS1. ECS1 and ECS2 may belong to a same PLMN, or may belong to different PLMNs, or identifiers of ECSPs of ECS1 and ECS2 may be the same, or identifiers of ECSPs of ECS1 and ECS2 may be different.

Step S220: The EEC or the UE (corresponding to the first device in the method 100) sends a third request message to ECS1 (corresponding to the first ECS in the method 100). For example, the third request message may be a service provisioning (service provisioning) request. The third request information is used for requesting information about the first EES. The third request information includes at least one of the following: an identifier of a PLMN accessed by the terminal device, an identifier of an ECSP, location information of the terminal device, feature information of an EES or an EAS, and application information.

It should be understood that the EEC may configure address information of ECS1. Therefore, before sending the third request message to ECS1, the EEC may obtain the address information of ECS1 locally. Alternatively, the EEC may obtain the address information of ECS1 in another manner. For example, the address information is delivered by a 5GC network to the UE/EEC.

Step S230: After receiving the third request message, ECS1 determines that an EES managed by ECS1 cannot provide an edge service to the terminal device. In other words, it is determined that ECS1 cannot provide an edge service to the terminal device. Alternatively, ECS 1 attempts to obtain, from the second ECS, information about an EES managed by the second ECS, to determine (which may be compared with an EES managed by ECS1) an optimal EES to provide an edge service to the terminal device. For example, after receiving the third request message, ECS1 fails to find an appropriate EES, or fails to find an EDN in which an application that the terminal device wants to access is deployed. The failure to find an appropriate EES includes that an EAS requested by the UE is not registered with the EES, or an EAS requested by the UE is registered with the EES but is overloaded.

Optionally, ECS1 records the third request message, which is used to trigger to search for another ECS when ECS1 subsequently receives another request of the EEC.

Optionally, the method 200 further includes the following steps.

Step S240: If ECS1 fails to find an appropriate EES, ECS1 sends third response information to the EEC/UE, indicating that ECS1 fails to find an appropriate EES or EDN.

In an implementation, the third response information includes indication information, indicating that ECS1 cannot provide an edge service to the terminal device, or indicating that an EES managed by ECS1 cannot provide an edge service to the terminal device.

Step S250: After receiving the third response information, the EEC/UE sends fourth request information to ECS1.

For example, the fourth request information is the same as the third request information. When receiving the fourth request information, ECS1 determines, based on the previously recorded third request information, that it is necessary to search for another ECS.

Alternatively, the fourth request information is different from the third request information, and the fourth request information includes indication information that indicates ECS1 to search for another ECS, and ECS1 may search for another ECS based on the indication information.

In an implementation, the fourth request information is an ECS discovery (discovery) request, the fourth request information includes at least one of an identifier of an ECSP, feature information of an EES or an EAS, an identifier of a PLMN, location information of the terminal device, and application information, and the fourth request information is used for searching for an ECS. The identifier of the ECSP may be an identifier of a PLMN and/or a name of a third-party service provider. The EAS registers an EAS profile (profile) to the EES. The EAS profile may include at least one of the following: an identifier of the EAS, endpoint information (endpoint) of the EAS, information about the ECSP, a service range of the EAS, and a DNAI associated with the EAS. The feature information of the EES or the EAS may be one or more items in the EES/EAS profile.

It should be understood that steps S240 and S250 are both optional, that is, when ECS 1 fails to find an appropriate EES in step S230, information about ECS2 may be directly obtained.

ECS1 may obtain the information about ECS2 (corresponding to the second ECS in the method 100) in at least one of the following manners:

### Manner 1:

ECS1 and ECS2 may register profiles with the federation control network element. When determining that an EES managed by ECS1 cannot provide an edge service to the terminal device, ECS1 may query the federation control network element for an EES that can provide an edge service to the terminal device, to determine an ECS corresponding to the EES, for example, ECS2 (EES2 managed by ECS2 can meet a request of the EEC).

For example, ECS1 determines the information about ECS2 by using steps S251 and S252.

Step S251: ECS1 sends first request information to the federation control network element, where the first request information is used for requesting the information about ECS2. Correspondingly, the federation control network element receives the first request information. The first request information includes at least one of the following: an identifier of a PLMN accessed by the terminal device, an identifier of an ECSP, location information of the terminal device, feature information of an EES or an EAS, and application information.

Step S252: The federation control network element sends first response information to ECS1, where the first response information includes the information about ECS2. The corresponding ECS1 receives the first response information.

### Manner 2:

ECS1 is configured with a profile of ECS2. When determining that an EES managed by ECS1 cannot provide an edge service to the terminal device, ECS1 may obtain information about ECS2 based on the locally configured profile of ECS2, and EES2 managed by ECS2 can provide an edge service to the terminal device.

For example, ECS1 determines the information about EES2 by using steps S253 and S254.

Step S253: ECS1 sends second request information to ECS2, where the second request information is used for requesting the information about EES2 (corresponding to the first EES in the method 100). Correspondingly, ECS2 receives the second request information.

Step S254: ECS2 sends second response information to ECS1, where the second response information includes the information about EES2. The corresponding ECS1 receives the second response information.

Optionally, the second request information includes at least one of the following: an identifier of a PLMN accessed by the terminal device, an identifier of an ECSP, location information of the terminal device, feature information of an EES or an EAS, and application information.

Step S260: ECS1 may determine information about a target EES (for example, EES2) based on the first response information or the second response information.

Step S270: ECS1 sends the information about ECS2 to the EEC. Correspondingly, the EEC receives the information about ECS2, and subsequently the EEC may send a service provisioning request to ECS2 to obtain the information about EES2, to obtain an edge service.

Alternatively, as an alternative step of step S270:
Step S280: EES2 registers a profile of EES2 with ECS1.
Step S281: ECS1 sends the information about EES2 to the EEC, and correspondingly, the EEC receives the information about EES2.

It should be understood that the information about ECS2 in step S270 or the information about EES2 in step S281 is the first information in step S120 in the method 100.

After the UE/EEC receives the information about EES2, the EEC may further send an EAS discovery request to EES2 to obtain address information of the EAS, to access an edge service.

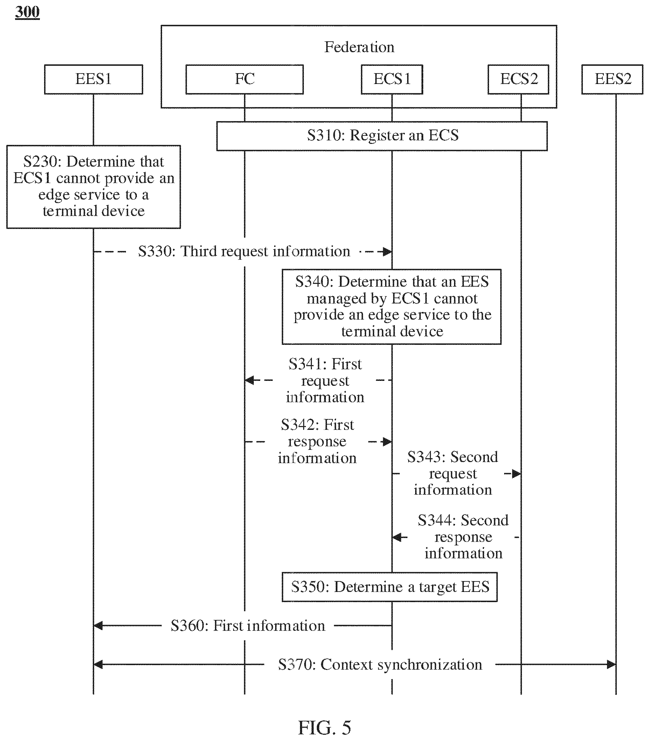

FIG. 5 is an interaction flowchart of a method for obtaining an edge service in another federation scenario according to this application. An application scenario of a method 300 shown in FIG. 5 is a federation scenario. To be specific, a plurality of ECSPs and/or a plurality of PLMNs form a federation. When a terminal device is in a roaming scenario, for example, home routed or local breakout, the terminal device may obtain an edge service by using the method 300. When the terminal device is in a non-roaming scenario, the terminal device may also obtain an edge service by using the method 300. The method 300 includes the following steps.

Step S310: One or more ECSs (for example, ECS1 and ECS2 in FIG. 5) register an ECS profile with a federation control network element.

Alternatively, each ECS is configured with a profile of another ECS, for example, ECS1 is configured with a profile of ECS2, and ECS2 is configured with a profile of ECS1. ECS1 and ECS2 may belong to a same PLMN, or may belong to different PLMNs, or identifiers of ECSPs of ECS1 and ECS2 may be the same, or identifiers of ECSPs of ECS1 and ECS2 may be different.

Step S320: A source EES (EES1, corresponding to the first device in the method 100) cannot find an appropriate EAS and/or EES to serve the terminal device.

For example, the EES receives an EAS discovery request (a connection has been established between the EEC and the EES) from the EEC, and the EES finds that no appropriate EAS is found, or the EES finds that no appropriate EAS is found when detecting that the terminal device moves and needs to be switched to another EAS.

Step S330: The source EES sends a third request message (the source EES is registered with ECS1) to ECS1 (corresponding to the first ECS in the method 100). For example, the third request message may be a service provisioning (service provisioning) request or an EES discovery request, and the third request information is used for requesting information about the first EES. The third request information includes at least one of the following: an identifier of a PLMN accessed by the terminal device, an identifier of an ECSP, location information of the terminal device, feature information of an EES or an EAS, and application information.

Step S340: ECS1 determines that an EES managed by ECS1 cannot provide an edge service to the terminal device. In other words, it is determined that ECS1 cannot provide an edge service to the terminal device. Alternatively, ECS1 attempts to obtain, from the second ECS, information about an EES managed by the second ECS, to determine (which may be compared with an EES managed by ECS1) an optimal EES to provide an edge service to the terminal device.

For example, the source EES cannot find an appropriate EAS and/or EES to serve the terminal device. For example, the EES receives an EAS discovery request from the EEC, and the EES finds that no appropriate EAS is found, or the EES finds that no appropriate EAS is found when detecting that the terminal device moves and needs to be switched to another EAS. The source EES sends an EES discovery request to ECS1, to request the information about the first EES. ECS1 searches for an EES that is not very appropriate to provide an edge service to the terminal device.

ECS1 may obtain the information about ECS2 (corresponding to the second ECS in the method 100) in at least one of the following manners:

### Manner 1:

ECS1 and ECS2 may register profiles with the federation control network element. When determining that an EES managed by ECS1 cannot provide an edge service to the terminal device, ECS1 may query the federation control network element for an ECS/EES that can provide an edge service to the terminal device, for example, ECS2 (EES2 managed by ECS2 can meet a request of the EEC).

For example, ECS1 determines the information about ECS2 by using steps S341 and S342.

Step S341: ECS1 sends first request information to the federation control network element, where the first request information is used for requesting the information about ECS2. Correspondingly, the federation control network element receives the first request information. The first request information includes at least one of the following: an identifier of a PLMN accessed by the terminal device, an identifier of an ECSP, location information of the terminal device, feature information of an EES or an EAS, and application information.

Step S342: The federation control network element sends first response information to ECS1, where the first response information includes the information about ECS2. The corresponding ECS1 receives the first response information.

### Manner 2:

ECS1 is configured with a profile of ECS2. When determining that an EES managed by ECS1 cannot provide an edge service to the terminal device, ECS1 may obtain information about ECS2 based on the locally configured profile of ECS2, and EES2 managed by ECS2 can provide an edge service to the terminal device.

Step S350: ECS1 may determine information about a target EES (for example, EES2) based on the first response information or the second response information.

For example, ECS1 determines the information about EES2 by using steps S343 and S344.

Step S343: ECS1 sends second request information to ECS2, where the second request information is used for requesting the information about EES2 (corresponding to the first EES in the method 100). Correspondingly, ECS2 receives the second request information.

Step S344: ECS2 sends second response information to ECS1, where the second response information includes the information about EES2. Corresponding ECS1 receives the second response information.

Optionally, the second request information includes at least one of the following: an identifier of a PLMN accessed by the terminal device, an identifier of an ECSP, location information of the terminal device, feature information of an EES or an EAS, and application information.

Step S360: ECS1 sends first information (the information about EES2) to the source EES, and correspondingly, the source EES receives the first information.

Step S370: Optionally, the terminal device sends an application discovery request to the EES, to request an EAS (a target EAS) managed by EES2. Context transfer may be performed between the EAS (a source EAS) previously accessed by the terminal device and the target EAS, or context synchronization/context transfer is performed between EES1 and EES2, so that the terminal device may obtain an edge service by using EES2, or service continuity is ensured.

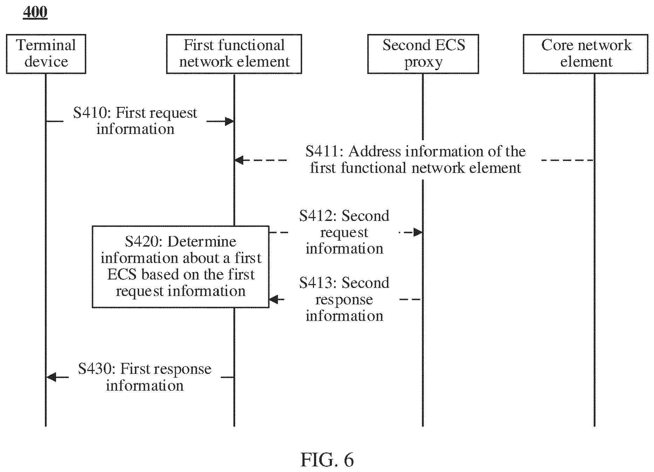

FIG. 6 is an interaction flowchart of another method for obtaining an edge service according to this application. A method 400 shown in FIG. 6 includes the following steps.

Step S410: A terminal device sends first request information to a first functional network element, where the first request information is used for requesting information about a first ECS, the first functional network element is a federation control network element or a first ECS discovery proxy, and the first functional network element stores information about at least one ECS. Correspondingly, the first functional network element receives the first request information.

An ECS discovery proxy (ECS discovery proxy) supports a function of discovering an ECS, and a name is not limited, for example, is an ECS discovery network element (ECS discovery function), or the like. The ECS discovery proxy may be an independent network element, or may be integrated into another network element. For example, the ECS discovery proxy is integrated into an NRF, a UDM, or an ECS. This is not limited in this application.

In an implementation, an ECS discovery proxy is deployed in each PLMN to perform topology hiding.

Optionally, the first request information includes at least one of the following: an identifier of a PLMN accessed by the terminal device, an identifier of an ECSP, location information of the terminal device, feature information of an EES or an EAS, and application information.

Optionally, the method 400 further includes the following steps.

Step S411: A core network element sends address information of the first functional network element to the terminal device, and correspondingly, the terminal device receives the address information of the first functional network element.

Optionally, the address information of the first functional network element is configured in the terminal device, configured in an EEC, or configured in a core network element. If the address information of the first functional network element is configured in the core network element (for example, a UDM), the core network element may deliver the address information of the first functional network element to the terminal device.

Step S420: After receiving the first request information, the first functional network element determines the information about the first ECS based on the first request information.

Optionally, the first functional network element is a first ECS discovery proxy, and the first ECS discovery proxy obtains the information about the first ECS from a second ECS discovery proxy.

The first ECS discovery proxy may obtain information about the second ECS discovery proxy in the following manner:

### Manner 1:

The first ECS discovery proxy configures or stores related information (one or more of information such as address information, a service range, information about a managed EES, an identifier of an ECSP, an identifier of a PLMN, and the like) of the second ECS discovery proxy, and the first ECS discovery proxy determines the information about the second ECS discovery proxy based on the first request information and/or a local configuration.

For example, if the identifier of the PLMN in the first request information is the same as the locally configured identifier of the PLMN of the second ECS discovery proxy, the first ECS discovery proxy obtains the information about the second ECS discovery proxy; and/or
if the identifier of the ECSP in the first request information is the same as the identifier of the ECSP of the second ECS discovery proxy, the first ECS discovery proxy determines the second ECS discovery proxy and obtains corresponding address information; and/or
if the identifier of the PLMN in the first request information is the same as the identifier of the PLMN of the second ECS discovery proxy, the first ECS discovery proxy determines the second ECS discovery proxy and obtains corresponding address information; and/or
if the feature information of the EES in the first request information matches an EES managed by the second ECS discovery proxy, the first ECS discovery proxy determines the second ECS discovery proxy and obtains corresponding address information.

### Manner 2:

The second ECS discovery proxy registers configuration information (one or more of information such as address information, a service range, information about a managed EES, an identifier of an ECSP, an identifier of a PLMN, and the like) of the second ECS discovery proxy with the federation control network element. Correspondingly, the federation control network element stores configuration information of an ECS.

The first ECS discovery proxy sends third request information to the federation control network element based on the first request information, where the third request information is used for requesting the information about the second ECS discovery proxy; and the first ECS discovery proxy receives third response information from the federation control network element, where the third response information includes the information about the second ECS discovery proxy. The third request information includes at least one of the following: an identifier of a PLMN accessed by the terminal device, an identifier of an ECSP, location information of the terminal device, feature information of an EES or an EAS, and application information.

In Manner 2, a method for determining the second ECS discovery proxy by the federation control network element is similar to the method for determining the information about the second ECS discovery proxy by the first ECS discovery proxy based on the first request information and/or the local configuration in Manner 1. A difference lies in that an execution body in Manner 1 is the first ECS discovery proxy, and an execution body in Manner 2 is the federation control network element. Details are not described herein again.

Optionally, after the first ECS discovery proxy obtains the information about the second ECS discovery proxy, the method 400 further includes the following steps.

Step S412: The first ECS discovery proxy sends second request information to the second ECS discovery proxy, where the second request information is used for requesting the information about the first ECS. Correspondingly, the second ECS discovery proxy receives the second request information.

Optionally, the second request information includes at least one of the following: an identifier of a PLMN accessed by the terminal device, an identifier of an ECSP, location information of the terminal device, feature information of an EES or an EAS, and application information.

Step S413: The second ECS discovery proxy sends second response information to the first ECS discovery proxy, where the second response information includes the information about the first ECS. The corresponding first ECS discovery proxy receives the second response information.

The method for determining the first ECS by the second ECS discovery proxy based on the second request information and the configuration information of the ECS stored/configured in the second ECS discovery proxy is similar to the method for determining the second ECS by the first ECS in step S101. A difference lies in that an execution body in step S101 is the first ECS, and an execution body herein is the second ECS discovery proxy, which is not described herein again.

Step S430: The first functional network element sends first response information to the terminal device, where the first response information includes the information about the first ECS. Correspondingly, the terminal device receives the first response information, and obtains an edge service through the first ECS.

After the terminal device (UE/EEC) receives a target ECS, the EEC may send a service provisioning request to the target ECS (the first ECS) to obtain the EES. Then, the EEC sends an EAS discovery request to the EES to obtain address information of the EAS, to access an edge service.

The following describes a method for obtaining an edge service by using the method 400 in a specific scenario.

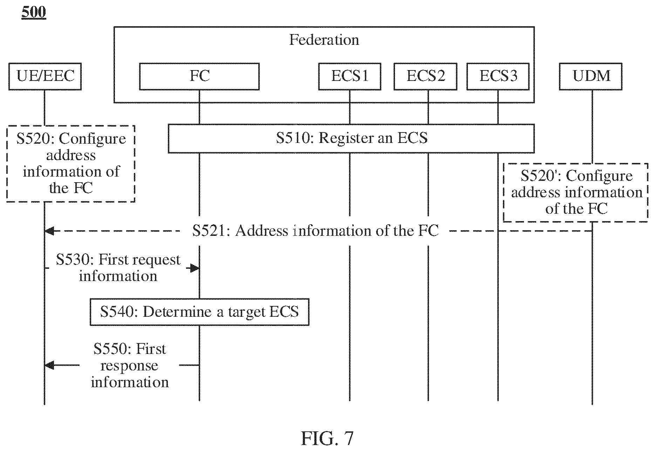

FIG. 7 is an interaction flowchart of a method for obtaining an edge service in a federation scenario according to this application. An application scenario of a method 500 shown in FIG. 7 is a federation scenario. In both a roaming scenario or a non-roaming scenario, the terminal device may obtain an edge service by using the method 500. The method 500 includes the following steps.

Step S510: One or more ECSs (ECS1, ECS2, and ECS3 are used as an example in FIG. 7) register an ECS profile with a federation control network element FC, where an FC is a logical network element and may be integrated into an existing functional network element. For example, the FC is integrated into an NRF, a UDR, or a UDM.

Alternatively, each ECS is configured with a profile of one or more other ECSs, for example, ECS1 is configured with profiles of ECS2 and ECS3, ECS2 is configured with profiles of ECS1 and ECS3, and ECS3 is configured with profiles of ECS1 and ECS2. ECS1, ECS2, and ECS3 may belong to a same PLMN, or may belong to different PLMNs, or identifiers of ECSPs of ECS1, ECS2, and ECS3 may be the same, or identifiers of ECSPs of ECS1, ECS2, and ECS3 may be different.

Specifically, if only one PLMN non-roaming scenario is considered, the identifier of the PLMN does not need to be configured. If a PLMN has only one ECS, a service range of an ECS does not need to be configured. If an ECSP is an operator, the identifier of the ECSP may be an identifier of a PLMN. This is not limited in this application.

Step S520: The UE/EEC configures address information of the federation control network element. Alternatively:
Step S520': A core network element (using a UDM as an example) configures the address information of the federation control network element.

Step S521: The core network element sends the address information of the federation control network element to the UE/EEC. Correspondingly, the UE/EEC receives the address information of the federation control network element.

Step S530: The UE/EEC sends first request information to the federation control network element, where the first request information is used for requesting information about a target ECS (an ECS that can provide an edge service to the terminal device). Correspondingly, the federation control network element receives the first request information.

Optionally, the first request information includes at least one of the following: an identifier of a PLMN accessed by the terminal device, an identifier of an ECSP, location information of the terminal device, feature information of an EES or an EAS, and application information.

Step S540: The federation control network element determines the information about the target ECS.

For example, the federation control network element determines the target ECS based on the locally configured ECS profile and the first request information.

In an implementation, the federation control network element determines the target ECS based on the locally configured identifier of the PLMN of the ECS and the identifier of the PLMN that is in the first request information and that is accessed by the terminal device.

In another implementation, if there are a plurality of ECSs in a same PLMN, the federation control network element obtains the location information of the terminal device from a 5G core network, and determines the target ECS based on the location information of the terminal device in the first request information and a locally configured service range of the ECS.

In another implementation, the federation control network element determines the target ECS based on the local identifier of the ECSP of the ECS and the identifier of the ECSP in the first request information.

Step S550: The federation control network element sends first response information to the UE/EEC, where the first response information includes the information about the target ECS. Correspondingly, the UE/EEC receives the first response information.

After the UE/EEC receives a target ECS, the EEC may send a service provisioning request to the target ECS to obtain the EES. Then, the EEC sends an EAS discovery request to the EES to obtain address information of the EAS, to access an edge service.

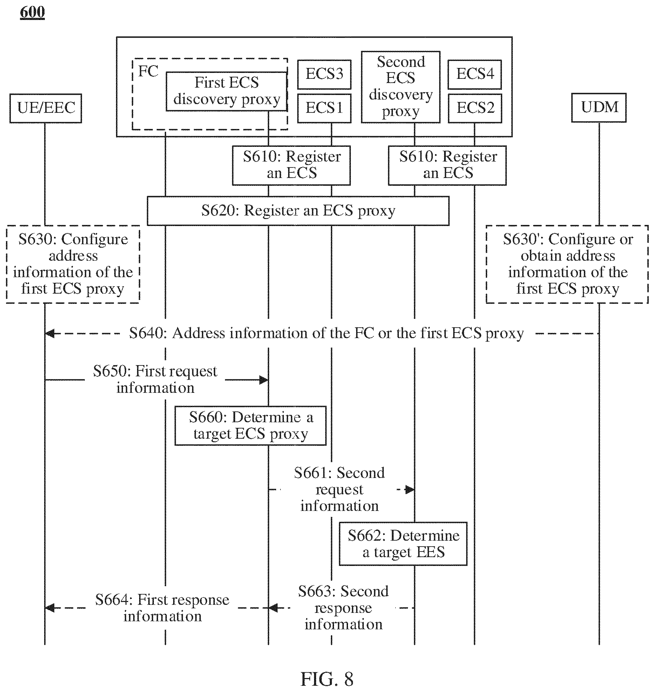

FIG. 8 is an interaction flowchart of another method for obtaining an edge service in a federation scenario according to this application. An application scenario of a method 600 shown in FIG. 8 is a federation scenario. To perform network and topology hiding, one ECS discovery proxy (discovery proxy) is deployed for each operator. In both a roaming scenario or a non-roaming scenario, the terminal device may obtain an edge service by using the method 600. The method 600 includes the following steps.

Step S610: One or more ECSs register an ECS profile with an ECS discovery proxy (in FIG. 8, ECS 1 and ECS3 are registered with a first ECS discovery proxy, and ECS2 and ECS4 are registered with a second ECS discovery proxy). The ECS discovery proxy may be a logical network element, and may be integrated into an existing functional network element. For example, the ECS discovery proxy is integrated into an NRF, a UDR, or a UDM.

Step S620: The one or more ECS discovery proxies register related information (one or more of information such as address information, a service range, information about a managed EES, an identifier of an ECSP, an identifier of a PLMN, and the like) of the one or more ECS discovery proxies with a federation control network element (the first ECS discovery proxy and the second ECS discovery proxy in FIG. 8 are registered with the federation control network element). The federation control network element may not belong to any operator to which the first ECS discovery proxy and the second ECS discovery proxy belong.

Alternatively, the first ECS discovery proxy is configured with related information of the second ECS discovery proxy, and the second ECS discovery proxy is configured with related information of the first ECS discovery proxy.

For example, the first ECS discovery proxy belongs to the first network. For example, the first network is a home domain network, and the second ECS discovery proxy belongs to a second network. For example, the second network is a network in a visited domain.

Step S630: UE/An EEC configures address information of the first ECS discovery proxy. Alternatively:
Step S630': A core network element (using a UDM as an example) configures or obtains address information of the first ECS discovery proxy.
Step S640: The core network element sends address information of the federation control network element or the address information of the first ECS discovery proxy to the UE/EEC, and correspondingly, the UE/EEC receives the address information of the federation control network element or the first ECS discovery proxy.

It should be understood that the UE/EEC may obtain the address information of the first ECS discovery proxy from a local configuration, or the UE/EEC may obtain the address information of the first ECS discovery proxy from the core network element, or the UE/EEC may obtain the address information of the federation control network element from the core network element, and then obtain the address information of the first ECS discovery proxy from the federation control network element.

Step S650: The UE/EEC sends first request information to the first ECS discovery proxy, where the first request information is used for requesting information about a target ECS (an ECS that can provide an edge service to the terminal device). Correspondingly, the first ECS discovery proxy receives the first request information. The first request information includes at least one of the following: an identifier of a PLMN accessed by the terminal device, an identifier of an ECSP, location information of the terminal device, feature information of an EES or an EAS, and application information.

Step S660: The first ECS discovery proxy determines information about a target ECS discovery proxy.

If the first ECS discovery proxy determines, based on the first request information, that an ECS registered on the first ECS discovery proxy has an ECS that can provide an edge service to the terminal, the first ECS discovery proxy is the target ECS discovery proxy.

Step S664: The first ECS discovery proxy sends the determined information about the target ECS to the UE/EEC. Correspondingly, after receiving the information about the target ECS, the UE/EEC obtains an edge service.

If the first ECS discovery proxy determines, based on the first request information, that ECSs registered on the first ECS discovery proxy do not include an ECS that can provide an edge service to the terminal, the first ECS discovery proxy determines that the target ECS discovery proxy is the second ECS discovery proxy. For a method for determining the target ECS discovery proxy by the first ECS discovery proxy, refer to Manner 1 of step S420. Details are not described herein again.

Step S661: The first ECS discovery proxy sends second request information to the second ECS discovery proxy, where the second request information is used for requesting the information about the first ECS. Correspondingly, the second ECS discovery proxy receives the second request information.

Optionally, the second request information includes at least one of the following: an identifier of a PLMN accessed by the terminal device, an identifier of an ECSP, location information of the terminal device, feature information of an EES or an EAS, and application information.

Step S662: The second ECS discovery proxy determines, based on the first request information, the target ECS that an ECS registered with the second ECS discovery proxy can provide an edge service to the terminal.

For a method for determining the target ECS by the second ECS discovery proxy, refer to the method for obtaining the information about the target ECS (the second ECS) by the first ECS in the method 100. A difference lies in that in the method 100, the execution body is the first ECS, and the execution body is the second ECS discovery proxy herein, which is not described herein again.

Step S663: The second ECS discovery proxy sends second response information to the first ECS discovery proxy, where the second response information includes the information about the first ECS. The corresponding first ECS discovery proxy receives the second response information.

Step S664: The first ECS discovery proxy sends first response information to the UE/EEC, where the first response information includes the information about the first ECS. Correspondingly, the UE/EEC receives the first response information, and obtains an edge service by using the target ECS.

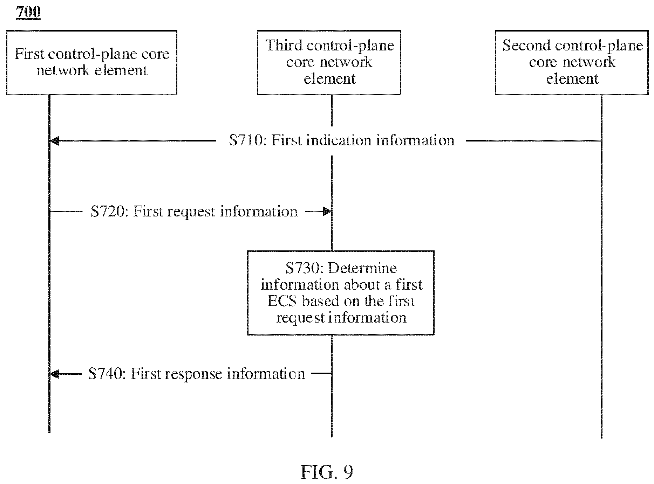

FIG. 9 is an interaction flowchart of a method for obtaining an edge service according to this application. A method 700 shown in FIG. 9 includes the following steps.

Step S710: A second control-plane core network element in a second network sends first indication information to a first control-plane core network element, where the first indication information indicates that a terminal device supports access to an edge service in a first network. Correspondingly, the first control-plane core network element in the first network receives the first indication information.

For example, the first network is a network in a visited domain, and the second network is a network in a home domain.

Step S720: The first control-plane core network element sends first request information to a third control-plane core network element in the first network based on the first indication information, where the first request information is used for requesting information about a first edge configuration server ECS in the first network. Correspondingly, the third control-plane core network element in the first network receives the first request information.

Optionally, the first request information includes at least one of the following: an identifier of a public land mobile network PLMN accessed by a terminal device, an identifier of an edge computing service provider ECSP, feature information of the EES or EAS, location information of the terminal device, and application information.

Step S730: The third control-plane core network element in the first network determines information about a first ECS based on the first request information.

The ECS profile is stored or configured in the third control-plane core network element. Optionally, the third control-plane core network element determines the information about the first ECS based on the identifier of the PLMN and a correspondence between the identifier of the PLMN and an ECS; and/or
the third control-plane core network element determines the information about the first ECS based on the identifier of the ECSP and a correspondence between the identifier of the ECSP and an ECS; and/or
the third control-plane core network element determines the information about the first ECS based on the location information of the terminal device and a service range of an ECS; and/or
the third control-plane core network element determines the information about the first ECS based on the application information.

Step S740: The first control-plane core network element receives first response information from the third control-plane core network element, where the first response information includes the information about the first ECS.

The following describes a method for obtaining an edge service by using the method 700 in a specific scenario.

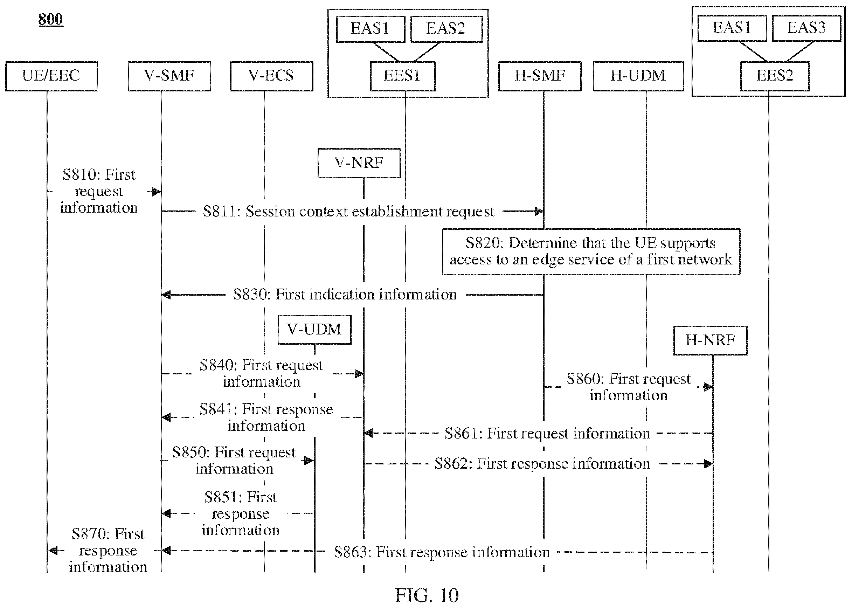

FIG. 10 is an interaction flowchart of a method for obtaining an edge service in a home routed roaming access scenario according to this application.

In a method 800 shown in FIG. 10, a UDM stores subscription data (the subscription data has per UE granularity) of UE, and the subscription data includes edge services in networks (for example, a V-PLMN) in a visited domain to which access is supported by the UE.

Optionally, the subscription data further includes information about an ECS corresponding to a network in a visited domain.

In an implementation, in a scenario in which only one ECS or a few ECSs are deployed for a single operator, the subscription data of the UE preconfigured by the UDM is not subscription data that has per UE granularity, but subscription data that has a per home domain network granularity. In other words, any UE in a same home domain subscribes to a same ECS.

For example, the information about the ECS is preconfigured in the UDM, that is, each UE in the network in the home domain may obtain the edge service by using the ECS.

In another implementation, this method is applicable to a scenario in which a plurality of ECSs are deployed for/managed by one operator. The ECSs register a service range, address information, and an identifier of an ECSP with an NRF. The ECSs may be deployed by an operator or a third party. If the ECSs are deployed by the operator, the identifier of the ECSP may be an identifier of a PLMN. If the ECSs are deployed by a third party, the identifier of the ECSP may be a name of a third-party service provider or an identifier of a PLMN and a name of a third-party service provider.

The method 800 includes the following steps.

Step S810: The UE/An EEC sends first request information to an SMF (for example, a V-SMF) in the visited domain, where the first request information is used for requesting information about a target ECS (an ECS that can provide an edge service to the terminal device). Correspondingly, the V-SMF receives the first request information.

Optionally, the first request information includes at least one of the following: an identifier of a PLMN accessed by the terminal device, an identifier of an ECSP, location information of the terminal device, feature information of an EES or an EAS, and application information.

For example, refer to an existing SA2 standard. The UE sends a session establishment request to the V-SMF. The session establishment request includes the first request information. Optionally, the session establishment request further carries indication information, and the indication information indicates that the EEC supports receiving of information about an ECS.

Step S811: The V-SMF sends a session context establishment request to an SMF (for example, an H-SMF) in a home domain. Optionally, the session context establishment request includes an identifier of a visited-domain PLMN (for example, a V-PLMN), or the H-SMF may determine the identifier of the visited-domain PLMN based on an identifier of the V-SMF or other information.

Step S820: The H-SMF obtains the subscription data of the UE from an H-UDM, and determines that the UE supports access to an edge service of a first network (a network in the visited domain currently accessed by the UE, for example, a V-PLMN).

Optionally, the subscription information obtained by the H-SMF from the H-UDM further includes information about an ECS (the V-ECS is used as an example) in a visited domain corresponding to the V-PLMN. The H-SMF sends the information about the ECS in the visited domain to the V-SMF.

If the subscription information obtained by the H-SMF from the H-UDM does not include information about a V-ECS corresponding to the V-PLMN, the H-SMF may query/obtain the information about the V-ECS from the H-NRF, and forward the information about the V-ECS to the V-SMF.

Specifically, the method includes step S860: The H-SMF sends the first request information to the H-NRF, where the first request information is used for requesting the information about the V-ECS. Correspondingly, the H-NRF receives the first request information. The first request information includes at least one of the following: an identifier of a PLMN accessed by the terminal device, an identifier of an ECSP, location information of the terminal device, feature information of an EES or an EAS, and application information.

If the H-NRF does not have address information of the V-ECS, the H-NRF obtains the information about the V-ECS from the V-NRF.

Specifically, the method includes step S861: The H-NRF forwards the first request information to the V-NRF.

Step S862: The V-NRF sends first response information to the H-NRF, where the first response information includes the information about the V-ECS. Correspondingly, the H-NRF receives the first response information.

Step S863: The H-NRF forwards the first response information to the V-SMF.

Alternatively, the following steps are performed after step S820:
Step S830: The H-SMF sends first indication information to the V-SMF, where the first indication information indicates that the UE supports access to an edge service of the first network. Correspondingly, the V-SMF receives the first indication information.

Optionally, the first indication information is further used for indicating the V-SMF to determine the V-ECS. The indication information may be specifically subscription information that supports access to an edge service of the V-PLMN, or the indication information may be explicit indication information.

Alternatively, the foregoing step S830 may be replaced with that the H-SMF sends the first indication information to the V-SMF, where the first indication information indicates the V-SMF to determine the V-ECS.

If the subscription information obtained by the H-SMF from the H-UDM does not include the information about the V-ECS corresponding to the first network, the V-SMF may determine the information about the V-ECS in the following manners.

### Manner 1:

Step S840: The V-SMF sends first request information to the V-NRF, where the first request information is used for requesting the information about the V-ECS. Correspondingly, the V-NRF receives the first request information. The first request information includes at least one of the following: an identifier of a PLMN accessed by the terminal device, an identifier of an ECSP, location information of the terminal device, feature information of an EES or an EAS, and application information.

Step S841: The V-NRF sends first response information to the V-SMF, where the first response information includes the information about the V-ECS. Correspondingly, the V-SMF receives the first response information.

The V-NRF may determine the V-ECS in the following implementations:

In an implementation, the V-NRF determines the V-ECS based on the identifier of the PLMN in the first request information and an identifier of a local V-PLMN.

In another implementation, if there are a plurality of ECSs in a same PLMN, the V-NRF determines the V-ECS based on the location information of the UE in the first request information and a service range of a local ECS.

In another implementation, the V-NRF determines the V-ECS based on the identifier of the ECSP in the first request information and an identifier of a local ECSP.

### Manner 2:

The V-SMF queries the V-ECS from the V-UDM. The V-UDM stores information about a V-ECS of the V-PLMN. The information about the V-ECS is not subscription data that has per UE granularity, and the information about the V-ECS is applicable to each UE in a network in a home domain.

Step S850: The V-SMF sends first request information to the V-UDM, where the first request information is used for requesting the information about the V-ECS. Correspondingly, the V-UDM receives the first request information. The first request information includes at least one of the following: an identifier of a PLMN accessed by the terminal device, an identifier of an ECSP, location information of the terminal device, feature information of an EES or an EAS, and application information.

Step S851: The V-NRF sends first response information to the V-UDM, where the first response information includes the information about the V-ECS. Correspondingly, the V-SMF receives the first response information.

After determining the information about the V-ECS, the V-SMF performs the following step.

Step S870: The V-SMF forwards the first response information (which may be any first response information in step S841, S851, or S863) to the UE/EEC, where the first response information includes the information about the V-ECS. Correspondingly, the UE/EEC receives the first response information, to further obtain an edge service.

It should be understood that a manner in which the V-UDM determines a V-ECS based on request information is the same as a manner in which the V-NRF determines a V-ECS. Details are not described herein again.

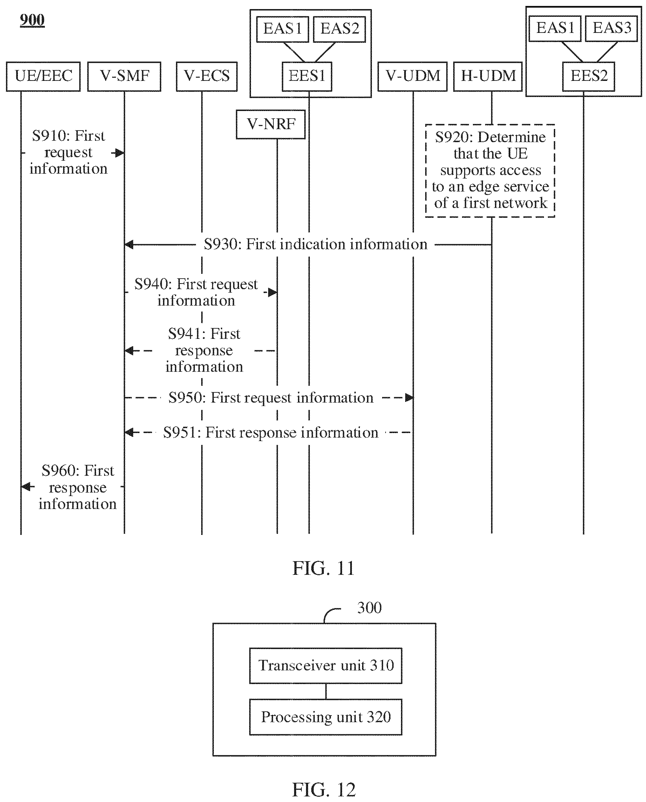

FIG. 11 is an interaction flowchart of a method for obtaining an edge service in a local breakout roaming access scenario according to this application.

In a method 900 shown in FIG. 11, same as that in the method 800, a UDM stores subscription data (the subscription data has per UE granularity) of UE, and the subscription data includes edge services in networks (for example, a V-PLMN) in a visited domain to which access is supported by the UE.

Optionally, the subscription data further includes information about an ECS corresponding to a network in a visited domain.

In an implementation, in a scenario in which only one ECS or a few ECSs are deployed for a single operator, the subscription data of the UE preconfigured by the UDM is not subscription data that has per UE granularity, but subscription data that has a per home domain network granularity.

For example, the information about the ECS is preconfigured in the UDM, that is, each UE in the network in the home domain may obtain the edge service by using the ECS.

In another implementation, this method is applicable to a scenario in which a plurality of ECSs are deployed for/managed by one operator. The ECSs register a service range, address information, and an identifier of an ECSP with an NRF. The ECSs may be deployed by an operator or a third party. If the ECSs are deployed by the operator, the identifier of the ECSP may be an identifier of a PLMN. If the ECSs are deployed by a third party, the identifier of the ECSP may be a name of a third-party service provider or an identifier of a PLMN and a name of a third-party service provider.

The method 900 includes the following steps:
Step S910: The UE/An EEC sends first request information to an SMF (for example, a V-SMF) in the visited domain, where the first request information is used for requesting information about a target ECS (an ECS and a V-ECS that can provide an edge service to the terminal device). Correspondingly, the V-SMF receives the first request information.

Optionally, the first request information includes at least one of the following: an identifier of a PLMN accessed by the terminal device, an identifier of an ECSP, location information of the terminal device, feature information of an EES or an EAS, and application information.

Step S920: The H-UDM determines, based on the subscription data of the UE from an H-UDM, that the UE supports access to an edge service of a first network (a network in the visited domain currently accessed by the UE, for example, a V-PLMN).

Step S930: The H-UDM sends first indication information to the V-SMF, where the first indication information indicates that the UE supports access to an edge service of the V-PLMN. Correspondingly, the V-SMF receives the first indication information.

Optionally, the first indication information is further used for indicating the V-SMF to determine the V-ECS. The indication information may be specifically subscription information that supports access to an edge service of the V-PLMN, or the indication information may be explicit indication information.

Alternatively, the foregoing step S930 may be replaced with that the H-UDM sends the first indication information to the V-SMF, where the first indication information indicates the V-SMF to determine the V-ECS.

The V-SMF may determine the information about the V-ECS by using the following step.

### Manner 1:

Step S940: The V-SMF sends first request information to the V-NRF, where the first request information is used for requesting the address information of the V-ECS. Correspondingly, the V-NRF receives the first request information. The first request information includes at least one of the following: an identifier of a PLMN accessed by the terminal device, an identifier of an ECSP, location information of the terminal device, feature information of an EES or an EAS, and application information.

Step S941: The V-NRF sends first response information to the V-SMF, where the first response information includes the information about the V-ECS. Correspondingly, the V-SMF receives the first response information.

The V-NRF may determine the V-ECS in the following implementations:
In an implementation, the V-NRF determines the V-ECS based on the identifier of the PLMN in the first request information and an identifier of a local V-PLMN.

In another implementation, if there are a plurality of ECSs in a same PLMN, the V-NRF determines the V-ECS based on the location information of the UE in the first request information and a service range of a local ECS.

In another implementation, the V-NRF determines the V-ECS based on the identifier of the ECSP in the first request information and an identifier of a local ECSP.

### Manner 2:

The V-SMF queries the V-ECS from the V-UDM. The V-UDM stores information about a V-ECS of the V-PLMN. The information about the V-ECS is not subscription data that has per UE granularity, and the information about the V-ECS is applicable to each UE in a network in a home domain.

Step S950: The V-SMF sends first request information to the V-UDM, where the first request information is used for requesting the information about the V-ECS. Correspondingly, the V-UDM receives the first request information. The first request information includes at least one of the following: an identifier of a PLMN accessed by the terminal device, an identifier of an ECSP, location information of the terminal device, feature information of an EES or an EAS, and application information.

Step S951: The V-NRF sends first response information to the V-UDM, where the first response information includes the information about the V-ECS. Correspondingly, the V-SMF receives the first response information.

After determining the information about the V-ECS, the V-SMF performs the following step.

Step S960: The V-SMF forwards the first response information (which may be first response information in step S941 or S951) to the UE/EEC, where the first response information includes the information about the V-ECS. Correspondingly, the UE/EEC receives the first response information, to further obtain an edge service.

It should be understood that a manner in which the V-UDM determines a V-ECS is the same as a manner in which the V-NRF determines a V-ECS. Details are not described herein again.

It should be understood that the steps shown in the dashed lines in the foregoing flowchart are optional steps, and a sequence of the steps is determined based on internal logic of the method. Sequence numbers shown in the figures are merely examples, and do not limit a sequence of the steps in this application.

It should be further understood that the methods provided in this embodiment of this application may be used separately, or may be used in combination. This is not limited in this application.

It should be noted that the execution bodies shown in FIG. 3 to FIG. 11 are merely examples, and the execution bodies may be chips, chip systems, or processors that support the execution bodies in implementing the methods shown in FIG. 3 to FIG. 11. This is not limited in this application.

The foregoing describes the method embodiments in embodiments of this application with reference to the accompanying drawings, and the following describes apparatus embodiments in embodiments of this application. It can be understood that the description of the method embodiments and the description of the apparatus embodiment may correspond to each other. Therefore, for a part that is not described, refer to the foregoing method embodiments.

It may be understood that in the foregoing method embodiments, the methods and operations implemented by functional network elements may be alternatively implemented by a component (for example, a chip or a circuit) in the functional network element. A method and an operation implemented by a terminal device may be implemented by a component (for example, a chip or a circuit) that can be used in the terminal device, and a method and an operation implemented by an ECS may be implemented by a component (for example, a chip or a circuit) that can be used in the ECS. The method and the operation implemented by a control-plane core network element may be implemented by a component (for example, a chip or a circuit) that can be used in the control-plane core network element.

The foregoing mainly describes the solutions provided in embodiments of this application from a perspective of interaction between network elements. It may be understood that, to implement the foregoing functions, each network element such as a transmitting end device or a receiving end device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional module division may be performed on the transmitting end device or the receiving end device based on the foregoing method example. For example, each functional module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 12 is a schematic block diagram of a communication apparatus according to an embodiment of this application. A communication apparatus 300 includes a transceiver unit 310 and a processing unit 320. The transceiver unit 310 may communicate with the outside, and the processing unit 320 is configured to process data. The transceiver unit 310 may also be referred to as a communication interface or a communication unit.

Optionally, the communication apparatus 300 may further include a storage unit. The storage unit may be configured to store instructions and/or data. The processing unit 320 may read the instructions and/or the data in the storage unit.

In a design, the communication apparatus 300 may be a first ECS, the transceiver unit 310 is configured to perform a sending or receiving operation of the first ECS in the foregoing method embodiments, and the processing unit 320 is configured to perform an internal processing operation of the first ECS in the foregoing method embodiments.

Alternatively, the communication apparatus 300 may be a device including the first ECS. Alternatively, the communication apparatus 300 may be a component configured in the first ECS, for example, a chip in the first ECS. In this case, the transceiver unit 310 may be an interface circuit, a pin, or the like. Specifically, the interface circuit may include an input circuit and an output circuit, and the processing unit 320 may include a processing circuit.

In a possible implementation, if it is determined that an EES managed by the first ECS cannot provide an edge service to a terminal device, the processing unit 320 is configured to obtain information about a second ECS. The transceiver unit 310 is configured to send first information to a first device, where the first information includes information about a first EES or the information about the second ECS, and the first EES is an EES managed by the second ECS.

In a possible implementation, the processing unit 320 is further configured to obtain the information about the second ECS based on configuration information.

In a possible implementation, the transceiver unit 310 is further configured to send first request information to a federation control network element, where the first request information is used for requesting the information about the second ECS; and the transceiver unit 310 is further configured to receive first response information from the federation control network element, where the first response information includes the information about the second ECS.

In a possible implementation, the transceiver unit 310 is further configured to send second request information to the second ECS, where the second request information is used for requesting the information about the first EES; and the transceiver unit 310 is further configured to receive second response information from the second ECS, where the second response information includes the information about the first EES.

In a possible implementation, the transceiver unit 310 is further configured to receive third request information from the first device, where the third request information is used for requesting the information about the first EES; and the processing unit 320 is further configured to determine, based on the third request information, that an EES managed by the first ECS cannot provide an edge service to the terminal device.

In a possible implementation, the first request information, the second request information, or the third request information includes at least one of the following: an identifier of a public land mobile network PLMN accessed by a terminal device, an identifier of an edge computing service provider ECSP, feature information of the first EES, and application information.

In a design, the communication apparatus 300 may be a second ECS, the transceiver unit 310 is configured to perform a sending or receiving operation of the second ECS in the foregoing method embodiments, and the processing unit 320 is configured to perform an internal processing operation of the second ECS in the foregoing method embodiments.

Alternatively, the communication apparatus 300 may be a device including the second ECS. Alternatively, the communication apparatus 300 may be a component configured in the second ECS, for example, a chip in the second ECS. In this case, the transceiver unit 310 may be an interface circuit, a pin, or the like. Specifically, the interface circuit may include an input circuit and an output circuit, and the processing unit 320 may include a processing circuit.

In a possible implementation, the transceiver unit 310 is configured to receive second request information from a first ECS, where the second request information is used for requesting information about a first EES. The processing unit 320 is configured to determine the information about the first EES based on the second request information. The transceiver unit 310 is further configured to send second response information to the first ECS, where the second response information includes the information about the first EES.

In a possible implementation, the second request information includes at least one of the following: an identifier of a public land mobile network PLMN accessed by a terminal device, an identifier of an edge computing service provider ECSP, feature information of the first EES, application information, and location information of the terminal device.

In a possible implementation, the processing unit 320 is further configured to determine the information about the first EES based on the second request information and a local ECS profile, where the ECS profile includes at least one of the following: address information of the ECS, a service range of the ECS, an EES profile managed by the ECS, an identifier of an ECSP of the ECS, and an identifier of a PLMN corresponding to the ECS.

In a design, the communication apparatus 300 may be a terminal device, the transceiver unit 310 is configured to perform a sending or receiving operation of the terminal device in the foregoing method embodiments, and the processing unit 320 is configured to perform an internal processing operation of the terminal device in the foregoing method embodiments.

Alternatively, the communication apparatus 300 may be a device including the terminal device. Alternatively, the communication apparatus 300 may be a component configured in the terminal device, for example, a chip in the terminal device. In this case, the transceiver unit 310 may be an interface circuit, a pin, or the like. Specifically, the interface circuit may include an input circuit and an output circuit, and the processing unit 320 may include a processing circuit.

In a possible implementation, the transceiver unit 310 is configured to send first request information to a first functional network element, where the first request information is used for requesting information about a first edge configuration server ECS, the first functional network element is a federation control network element or a first ECS discovery proxy, and the first functional network element stores information about at least one ECS. The transceiver unit 310 is further configured to receive first response information from the first functional network element, where the first response information includes the information about the first ECS.

In a possible implementation, the processing unit 320 is configured to obtain address information of the first functional network element.

In a possible implementation, the first request information includes at least one of the following: an identifier of a public land mobile network PLMN accessed by a terminal device, an identifier of an edge computing service provider ECSP, and location information of the terminal device.

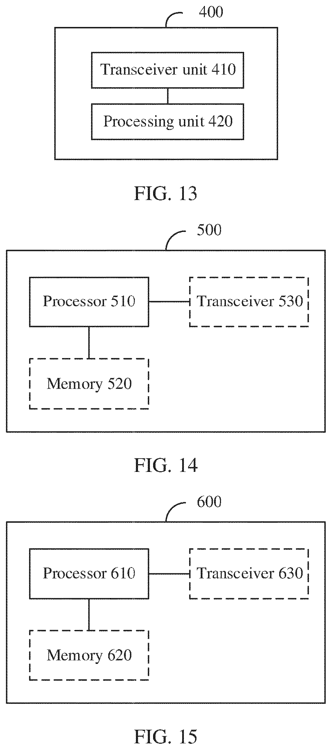

FIG. 13 is a schematic block diagram of a communication apparatus according to an embodiment of this application. A communication apparatus 400 includes a transceiver unit 410 and a processing unit 420. The transceiver unit 410 may communicate with the outside, and the processing unit 420 is configured to process data. The transceiver unit 410 may also be referred to as a communication interface or a communication unit.

Optionally, the communication apparatus 400 may further include a storage unit. The storage unit may be configured to store instructions and/or data. The processing unit 420 may read the instructions and/or the data in the storage unit.

In a design, the communication apparatus 400 may be a first functional network element, the transceiver unit 410 is configured to perform a sending or receiving operation of the first functional network element in the foregoing method embodiments, and the processing unit 420 is configured to perform an internal processing operation of the first functional network element in the foregoing method embodiments.

Alternatively, the communication apparatus 400 may be a device including the first functional network element. Alternatively, the communication apparatus 400 may be a component configured in the first functional network element, for example, a chip in the first functional network element. In this case, the transceiver unit 410 may be an interface circuit, a pin, or the like. Specifically, the interface circuit may include an input circuit and an output circuit, and the processing unit 420 may include a processing circuit.

In a possible implementation, the transceiver unit 410 is configured to receive first request information from a terminal device, where the first request information is used for requesting information about a first edge configuration server ECS, the first functional network element is a federation control network element or a first ECS discovery proxy, and the first functional network element stores information about at least one ECS. The processing unit 420 is configured to determine the first ECS based on the first request information. The transceiver unit 410 is further configured to send first response information to the terminal device, where the first response information includes the information about the first ECS.

In a possible implementation, the first functional network element is a first ECS discovery proxy, the processing unit 420 is further configured to determine information about a second ECS discovery proxy based on the first request information and/or a local configuration, the transceiver unit 410 is further configured to send second request information to the second ECS discovery proxy, where the second request information is used for requesting the information about the first ECS, and the transceiver unit 410 is further configured to receive second response information from the second ECS discovery proxy, where the second response information includes the information about the first ECS.

In a possible implementation, the processing unit 420 is configured to control the transceiver unit 410 to send third request information to the federation control network element based on the first request information, where the third request information is used for requesting the information about the second ECS discovery proxy; and the transceiver unit 410 is further configured to receive third response information from the federation control network element, where the third response information includes the information about the second ECS discovery proxy.

In a possible implementation, the first request information includes at least one of the following: an identifier of a public land mobile network PLMN accessed by a terminal device, an identifier of an edge computing service provider ECSP, and location information of the terminal device.

In a design, the communication apparatus 400 may be a first control-plane core network element, the transceiver unit 410 is configured to perform a sending or receiving operation of the first control-plane core network element in the foregoing method embodiments, and the processing unit 420 is configured to perform an internal processing operation of the first control-plane core network element in the foregoing method embodiments.

Alternatively, the communication apparatus 400 may be a device including the first control-plane core network element. Alternatively, the communication apparatus 400 may be a component configured in the first control-plane core network element, for example, a chip in the first control-plane core network element. In this case, the transceiver unit 410 may be an interface circuit, a pin, or the like. Specifically, the interface circuit may include an input circuit and an output circuit, and the processing unit 420 may include a processing circuit.

In a possible implementation, the transceiver unit 410 is configured to receive first indication information from a second control-plane core network element in a second network, where the first indication information indicates that a terminal device supports access to an edge service in the first network. The processing unit 420 is configured to control the transceiver unit to send first request information to a third control-plane core network element in the first network based on the first indication information, where the first request information is used for requesting information about a first edge configuration server ECS in the first network. The transceiver unit 410 is further configured to receive first response information from the third control-plane core network element, where the first response information includes the information about the first ECS.

In a possible implementation, the first request information includes at least one of the following: an identifier of a public land mobile network PLMN accessed by a terminal device, an identifier of an edge computing service provider ECSP, and location information of the terminal device.

In a design, the communication apparatus 400 may be a third control-plane core network element, the transceiver unit 410 is configured to perform a sending or receiving operation of the third control-plane core network element in the foregoing method embodiments, and the processing unit 420 is configured to perform an internal processing operation of the third control-plane core network element in the foregoing method embodiments.

Alternatively, the communication apparatus 400 may be a device including the third control-plane core network element. Alternatively, the communication apparatus 400 may be a component configured in the third control-plane core network element, for example, a chip in the third control-plane core network element. In this case, the transceiver unit 410 may be an interface circuit, a pin, or the like. Specifically, the interface circuit may include an input circuit and an output circuit, and the processing unit 420 may include a processing circuit.

In a possible implementation, the transceiver unit 410 is configured to receive first request information from a first control-plane core network element, where the first request information is used for requesting information about a first edge configuration server ECS, and the first request information includes at least one of the following: an identifier of a public land mobile network PLMN accessed by a terminal device, an identifier of an edge computing service provider ECSP, and location information of the terminal device. The processing unit 420 is configured to determine the information about the first ECS based on the first request information. The transceiver unit 410 is further configured to send first response information to the first control-plane core network element, where the first response information includes the information about the first ECS.

In a possible implementation, the processing unit 420 is further configured to determine the information about the first ECS based on the identifier of the PLMN and a correspondence between the identifier of the PLMN and an ECS; and/or the processing unit 420 is further configured to determine the information about the first ECS based on the identifier of the ECSP and a correspondence between the identifier of the ECSP and an ECS; and/or the processing unit 420 is further configured to determine the information about the first ECS based on the location information of the terminal device and a service range of an ECS.

As shown in FIG. 14, an embodiment of this application further provides a communication apparatus 500. The communication apparatus 500 includes a processor 510. The processor 510 is coupled to a memory 520. The memory 520 is configured to store a computer program or instructions and/or data. The processor 510 is configured to execute the computer program or the instructions and/or the data stored in the memory 520, so that the method in the foregoing method embodiment is performed.

Optionally, the communication apparatus 500 includes one or more processors 510.

Optionally, as shown in FIG. 14, the communication apparatus 500 may further include the memory 520.

Optionally, the communication apparatus 500 may include one or more memories 520.

Optionally, the memory 520 may be integrated with the processor 510, or separately disposed.

Optionally, as shown in FIG. 14, the communication apparatus 500 may further include a transceiver 530 and/or a communication interface. The transceiver 530 and/or the communication interface are/is configured to send and/or receive a signal. For example, the processor 510 is configured to control the transceiver 530 to send and/or receive a signal.

In a solution, the communication apparatus 500 is configured to perform the operations performed by the first ECS in the foregoing method embodiments.

For example, the processor 510 is configured to implement an operation performed inside the first ECS in the foregoing method embodiments, and the transceiver 530 is configured to implement a sending or receiving operation performed by the first ECS in the foregoing method embodiments. The processing unit 320 in the apparatus 300 may be the processor in FIG. 14, and the transceiver unit 310 may be the transceiver and/or the communication interface in FIG. 14. For specific operations performed by the processor 510, refer to the foregoing description of the processing unit 320. For operations performed by the transceiver 530, refer to the description of the transceiver unit 310. Details are not described herein again.

In another solution, the communication apparatus 500 is configured to perform the operations performed by the second ECS in the foregoing method embodiments.

For example, the processor 510 is configured to implement an operation performed inside the second ECS in the foregoing method embodiments, and the transceiver 530 is configured to implement a sending or receiving operation performed by the second ECS in the foregoing method embodiments. The processing unit 320 in the apparatus 300 may be the processor in FIG. 14, and the transceiver unit 310 may be the transceiver and/or the communication interface in FIG. 14. For specific operations performed by the processor 510, refer to the foregoing description of the processing unit 320. For operations performed by the transceiver 530, refer to the description of the transceiver unit 310. Details are not described herein again.

In another solution, the communication apparatus 500 is configured to perform the operations performed by the terminal device in the foregoing method embodiments.

For example, the processor 510 is configured to implement an operation performed inside the terminal device in the foregoing method embodiments, and the transceiver 530 is configured to implement a sending or receiving operation performed by the terminal device in the foregoing method embodiments. The processing unit 320 in the apparatus 300 may be the processor in FIG. 14, and the transceiver unit 310 may be the transceiver and/or the communication interface in FIG. 14. For specific operations performed by the processor 510, refer to the foregoing description of the processing unit 320. For operations performed by the transceiver 530, refer to the description of the transceiver unit 310. Details are not described herein again.

As shown in FIG. 15, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the method in the foregoing method embodiment is performed.

Optionally, the communication apparatus 600 includes one or more processors 610.

Optionally, as shown in FIG. 15, the communication apparatus 600 may further include the memory 620.

Optionally, the communication apparatus 600 may include one or more memories 620.

Optionally, the memory 620 may be integrated with the processor 610, or separately disposed.

Optionally, as shown in FIG. 15, the communication apparatus 600 may further include a transceiver 630 and/or a communication interface. The transceiver 630 and/or the communication interface are/is configured to send and/or receive a signal. For example, the processor 610 is configured to control the transceiver 630 and/or the communication interface to send and/or receive a signal.

In a solution, the communication apparatus 600 is configured to perform the operations performed by the first functional network element in the foregoing method embodiments. For example, the processor 610 is configured to implement an operation performed inside the first functional network element in the foregoing method embodiments, and the transceiver 630 is configured to implement a sending or receiving operation performed by the first functional network element in the foregoing method embodiments. The processing unit 420 in the apparatus 400 may be the processor in FIG. 15, and the transceiver unit 410 may be the transceiver in FIG. 15. For specific operations performed by the processor 610, refer to the foregoing description of the processing unit 420. For operations performed by the transceiver 630, refer to the description of the transceiver unit 410. Details are not described herein again.

In another solution, the communication apparatus 600 is configured to perform the operations performed by the first control-plane core network element in the foregoing method embodiments. For example, the processor 610 is configured to implement an operation performed inside the first control-plane core network element in the foregoing method embodiments, and the transceiver 630 is configured to implement a sending or receiving operation performed by the first control-plane core network element in the foregoing method embodiments. The processing unit 420 in the apparatus 400 may be the processor in FIG. 15, and the transceiver unit 410 may be the transceiver in FIG. 15. For specific operations performed by the processor 610, refer to the foregoing description of the processing unit 420. For operations performed by the transceiver 630, refer to the description of the transceiver unit 410. Details are not described herein again.

In another solution, the communication apparatus 600 is configured to perform the operations performed by the third control-plane core network element in the foregoing method embodiments. For example, the processor 610 is configured to implement an operation performed inside the third control-plane core network element in the foregoing method embodiments, and the transceiver 630 is configured to implement a sending or receiving operation performed by the third control-plane core network element in the foregoing method embodiments. The processing unit 420 in the apparatus 400 may be the processor in FIG. 15, and the transceiver unit 410 may be the transceiver in FIG. 15. For specific operations performed by the processor 610, refer to the foregoing description of the processing unit 420. For operations performed by the transceiver 630, refer to the description of the transceiver unit 410. Details are not described herein again.

According to the method provided in embodiments of this application, this application further provides a computer-readable medium. The computer-readable medium stores program code. When the program code is run on a computer, the computer is enabled to perform the method in any one of the embodiments shown in FIG. 3 to FIG. 11.

For example, when the computer program is executed by a computer, the computer is enabled to implement the method performed by the first ECS, the method performed by the second ECS, the method performed by the terminal device, the method performed by the first functional network element, the method performed by the first control-plane core network element, or the method performed by the third control-plane core network element in the foregoing method embodiments.

An embodiment of this application further provides a computer program product including instructions. When the instructions are executed by a computer, the computer is enabled to implement the method performed by the first ECS, the method performed by the second ECS, the method performed by the terminal device, the method performed by the first functional network element, the method performed by the first control-plane core network element, or the method performed by the third control-plane core network element in the foregoing method embodiments.

An embodiment of this application further provides a communication system. The communication system includes the first ECS, the second ECS, and the terminal device in the foregoing embodiments. Optionally, the communication system further includes the first functional network element, the first control-plane core network element, or the third control-plane core network element in the foregoing embodiments.

For explanations and beneficial effects of related content of any of the communication apparatuses provided above, refer to the corresponding method embodiment provided above. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

The first ECS, the second ECS, the terminal device, the first functional network element, and the control-plane core network element in the foregoing apparatus embodiments correspond to the first ECS, the second ECS, the terminal device, the first functional network element, and the control-plane core network element in the method embodiments, and corresponding modules or units perform corresponding steps. For example, a communication unit (transceiver) performs a sending or receiving step in the method embodiments, and other steps other than sending and receiving may be performed by a processing unit (processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but only within the scope of the invention as defined by the appended claims.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, an optical disc, or the like.

## Claims

1. A method for obtaining an edge service for a terminal device, comprising:
if a first edge configuration server determines that an edge enabler server managed by the first edge configuration server cannot provide an edge service to the terminal device, obtaining, by the first edge configuration server, information about a second edge configuration server (S110); and
sending, by the first edge configuration server, first information to a first device, wherein the first information comprises information about a first edge enabler server or the information about the second edge configuration server, and the first edge enabler server is an edge enabler server managed by the second edge configuration server, and the first device is a terminal device, an Edge Enabler Client, EEC, or an Edge Enabler Server, EES (S120); the method being **characterized in that**
the obtaining, by the first edge configuration server, information about a second edge configuration server comprises (S110):
sending, by the first edge configuration server, first request information to a federation control network element supporting edge configuration server discovery, wherein the first request information is used for requesting the information about the second edge configuration server (S102); and
receiving, by the first edge configuration server, first response information from the federation control network element, wherein the first response information comprises the information about the second edge configuration server (S103).

2. The method according to claim 1, wherein the obtaining, by the first edge configuration server, information about a second edge configuration server comprises:
obtaining, by the first edge configuration server, the information about the second edge configuration server based on configuration information.

3. The method according to claim 1, wherein the federation control network element stores information about at least one edge configuration server.

4. The method according to any one of claims 1 to 3, wherein before the sending, by the first edge configuration server, first information to a first device, the method further comprises:
sending, by the first edge configuration server, second request information to the second edge configuration server, wherein the second request information is used for requesting the information about the first edge enabler server (S104); and
receiving, by the first edge configuration server, second response information from the second edge configuration server, wherein the second response information comprises the information about the first edge enabler server (S105).

5. The method according to any one of claims 1 to 4, wherein the method further comprises:
receiving, by the first edge configuration server, third request information from the first device, wherein the third request information is a service provisioning request (S220); and
determining, by the first edge configuration server based on the third request information, that an edge enabler server managed by the first edge configuration server cannot provide an edge service to the terminal device (S230).

6. The method according to claim 5, wherein the third request information comprises location information of the terminal device, and
wherein the determining, by the first edge configuration server based on the third request information, that an edge enabler server managed by the first edge configuration server cannot provide an edge service to the terminal device comprises:
determining, by the first edge configuration server based on the location information of the terminal device, that an edge enabler server managed by the first edge configuration server cannot provide an edge service to the terminal device.

7. The method according to claim 5 or 6, wherein the third request information comprises at least one of the following:
an identifier of a public land mobile network PLMN accessed by the terminal device, an identifier of an edge computing service provider , feature information of the first edge enabler server, and application information.

8. The method according to claim 1, further comprising:
receiving, by the federation control network element, the first request information (S251);
sending, by the federation control network element, the first response information to the first edge configuration server (S252).

9. The method according to claim 4, further comprising:
receiving, by the second edge configuration server, the second request information (S253);
determining, by the second edge configuration server, the information about the first edge enabler server based on the second request information; and
sending, by the second edge configuration server, the second response information to the second edge configuration server (S254).

10. The method according to any one of the claims 1 to 9, further comprising:
receiving, by the first device, the first information (S120).

11. A method for obtaining an edge service according to claim 1, wherein the method further comprises:
receiving, by the second edge configuration server, second request information from the first edge configuration server, wherein the second request information is used by the first edge configuration server for requesting information about a first edge enabler server from the second edge configuration server (S104);
determining, by the second edge configuration server, the information about the first edge enabler server based on the second request information; and
sending, by the second edge configuration server, second response information to the first edge configuration server, wherein the second response information comprises the information about the first edge enabler server (S105).

12. A communication apparatus, comprising a module configured to perform the method according to any one of claims 1 to 7.

13. A computer-readable storage medium, wherein the computer-readable storage medium is configured to store a computer program, and when the computer program is run on a computer, the computer is enabled to perform the method according to any one of claims 1 to 7.

14. A system, comprising a first edge configuration server configured to perform the method of claims 1 to 7 a federation control network element configured to perform the method of claim 8, a second edge configuration server configured to perform the method of claim 9, and a first device configured to perform the method of claim 10.

## Patentansprüche

1. Verfahren zum Erlangen eines Edge-Dienstes für ein Endgerät, umfassend:
wenn ein erster Edge-Konfigurationsserver bestimmt, dass ein Edge-Enabler-Server, der durch den ersten Edge-Konfigurationsserver verwaltet wird, keinen Edge-Dienst an das Endgerät bereitstellen kann, Erlangen, durch den ersten Edge-Konfigurationsserver, von Informationen über einen zweiten Edge-Konfigurationsserver (S110); und
Senden, durch den ersten Edge-Konfigurationsserver, erster Informationen an eine erste Einrichtung, wobei die ersten Informationen Informationen über einen ersten Edge-Enabler-Server oder die Informationen über den zweiten Edge-Konfigurationsserver umfassen und der erste Edge-Enabler-Server ein Edge-Enabler-Server ist, der durch den zweiten Edge-Konfigurationsserver verwaltet wird, und die erste Einrichtung ein Endgerät, ein Edge-Enabler-Client, EEC, oder ein Edge-Enabler-Server, EES, (S120) ist; wobei das Verfahren **dadurch gekennzeichnet ist, dass**
das Erlangen, durch den ersten Edge-Konfigurationsserver, von Informationen über einen zweiten Edge-Konfigurationsserver (S110) Folgendes umfasst:
Senden, durch den ersten Edge-Konfigurationsserver, erster Anforderungsinformationen an ein Föderations-Steuerungs-Netzelement, das eine Edge-Konfigurationsserver-Ermittlung unterstützt, wobei die ersten Anforderungsinformationen zum Anfordern der Informationen über den zweiten Edge-Konfigurationsserver (S102) verwendet werden; und
Empfangen, durch den ersten Edge-Konfigurationsserver, erster Antwortinformationen von dem Föderations-Steuerungs-Netzelement, wobei die ersten Antwortinformationen die Informationen über den zweiten Edge-Konfigurationsserver (S103) umfassen.

2. Verfahren nach Anspruch 1, wobei das Erlangen, durch den ersten Edge-Konfigurationsserver, von Informationen über einen zweiten Edge-Konfigurationsserver Folgendes umfasst:
Erlangen, durch den ersten Edge-Konfigurationsserver, der Informationen über den zweiten Edge-Konfigurationsserver basierend auf Konfigurationsinformationen.

3. Verfahren nach Anspruch 1, wobei das Föderations-Steuerungs-Netzelement Informationen über mindestens einen Edge-Konfigurationsserver speichert.

4. Verfahren nach einem der Ansprüche 1 bis 3, wobei das Verfahren vor dem Senden, durch den ersten Edge-Konfigurationsserver, erster Informationen an eine erste Einrichtung ferner Folgendes umfasst:
Senden, durch den ersten Edge-Konfigurationsserver, zweiter Anforderungsinformationen an den zweiten Edge-Konfigurationsserver, wobei die zweiten Anforderungsinformationen zum Anfordern der Informationen über den ersten Edge-Enabler-Server (S104) verwendet werden; und
Empfangen, durch den ersten Edge-Konfigurationsserver, zweiter Antwortinformationen von dem zweiten Edge-Konfigurationsserver, wobei die zweiten Antwortinformationen die Informationen über den ersten Edge-Enabler-Server (S105) umfassen.

5. Verfahren nach einem der Ansprüche 1 bis 4, wobei das Verfahren ferner Folgendes umfasst:
Empfangen, durch den ersten Edge-Konfigurationsserver, dritter Anforderungsinformationen von der ersten Einrichtung, wobei es sich bei den dritten Anforderungsinformationen um eine Dienstbereitstellungsanforderung (S220) handelt; und
Bestimmen, durch den ersten Edge-Konfigurationsserver basierend auf den dritten Anforderungsinformationen, dass ein Edge-Enabler-Server, der durch den ersten Edge-Konfigurationsserver verwaltet wird, keinen Edge-Dienst an das Endgerät (S230) bereitstellen kann.

6. Verfahren nach Anspruch 5, wobei die dritten Anforderungsinformationen Standortinformationen des Endgeräts umfassen und
wobei das Bestimmen, durch den ersten Edge-Konfigurationsserver basierend auf den dritten Anforderungsinformationen, dass ein Edge-Enabler-Server, der durch den ersten Edge-Konfigurationsserver verwaltet wird, keinen Edge-Dienst an das Endgerät bereitstellen kann, Folgendes umfasst:
Bestimmen, durch den ersten Edge-Konfigurationsserver basierend auf den Standortinformationen des Endgeräts, dass ein Edge-Enabler-Server, der durch den ersten Edge-Konfigurationsserver verwaltet wird, keinen Edge-Dienst an das Endgerät bereitstellen kann.

7. Verfahren nach Anspruch 5 oder 6, wobei die dritten Anforderungsinformationen mindestens eines der Folgenden umfassen:
eine Kennung eines öffentlichen landgestützten Mobilfunknetzes, PLMN, auf welches durch das Endgerät zugegriffen wird, eine Kennung eines Edge-Computing-Dienstanbieters, Funktionsinformationen des ersten Edge-Enabler-Servers und Anwendungsinformationen.

8. Verfahren nach Anspruch 1, ferner umfassend:
Empfangen, durch das Föderations-Steuerungs-Netzelement, der ersten Anforderungsinformationen (S251);
Senden, durch das Föderations-Steuerungs-Netzelement, der ersten Antwortinformationen an den ersten Edge-Konfigurationsserver (S252).

9. Verfahren nach Anspruch 4, ferner umfassend:
Empfangen, durch den zweiten Edge-Konfigurationsserver, der zweiten Anforderungsinformationen (S253);
Bestimmen, durch den zweiten Edge-Konfigurationsserver, der Informationen über den ersten Edge-Enabler-Server basierend auf den zweiten Anforderungsinformationen; und
Senden, durch den zweiten Edge-Konfigurationsserver, der zweiten Antwortinformationen an den zweiten Edge-Konfigurationsserver (S254).

10. Verfahren nach einem der Ansprüche 1 bis 9, ferner umfassend: Empfangen, durch die erste Einrichtung, der ersten Informationen (S120).

11. Verfahren zum Erlangen eines Edge-Dienstes nach Anspruch 1, wobei das Verfahren ferner Folgendes umfasst:
Empfangen, durch den zweiten Edge-Konfigurationsserver, zweiter Anforderungsinformationen von dem ersten Edge-Konfigurationsserver, wobei die zweiten Anforderungsinformationen durch den ersten Edge-Konfigurationsserver zum Anfordern von Informationen über einen ersten Edge-Enabler-Server von dem zweiten Edge-Konfigurationsserver (S104) verwendet werden;
Bestimmen, durch den zweiten Edge-Konfigurationsserver, der Informationen über den ersten Edge-Enabler-Server basierend auf den zweiten Anforderungsinformationen; und
Senden, durch den zweiten Edge-Konfigurationsserver, zweiter Antwortinformationen an den ersten Edge-Konfigurationsserver, wobei die zweiten Antwortinformationen die Informationen über den ersten Edge-Enabler-Server (S105) umfassen.

12. Kommunikationsvorrichtung, umfassend ein Modul, das dazu konfiguriert ist, das Verfahren nach einem der Ansprüche 1 bis 7 durchzuführen.

13. Computerlesbares Speichermedium, wobei das computerlesbare Speichermedium dazu konfiguriert ist, ein Computerprogramm zu speichern, und, wenn das Computerprogramm auf einem Computer ausgeführt wird, der Computer in die Lage versetzt wird, das Verfahren nach einem der Ansprüche 1 bis 7 durchzuführen.

14. System, umfassend einen ersten Edge-Konfigurationsserver, der dazu konfiguriert ist, das Verfahren der Ansprüche 1 bis 7 durchzuführen, ein Föderations-Steuerungs-Netzelement, das dazu konfiguriert ist, das Verfahren des Anspruchs 8 durchzuführen, einen zweiten Edge-Konfigurationsserver, der dazu konfiguriert ist, das Verfahren des Anspruchs 9 durchzuführen, und eine erste Einrichtung, die dazu konfiguriert ist, das Verfahren des Anspruchs 10 durchzuführen.

## Revendications

1. Procédé d'obtention d'un service edge pour un dispositif terminal, comprenant :
si un premier serveur de configuration edge détermine qu'un serveur d'activation edge géré par le premier serveur de configuration edge ne peut pas fournir un service edge au dispositif terminal, l'obtention, par le premier serveur de configuration edge, d'informations sur un second serveur de configuration edge (S110) ; et
l'envoi, par le premier serveur de configuration edge, de premières informations à un premier dispositif, dans lequel les premières informations comprennent des informations sur un premier serveur d'activation edge ou les informations sur le second serveur de configuration edge, et le premier serveur d'activation edge étant un serveur d'activation edge géré par le second serveur de configuration edge, et le premier dispositif étant un terminal, un client d'activation edge, EEC, ou un serveur d'activation edge, EES (S120) ; le procédé étant **caractérisé en ce que**
l'obtention, par le premier serveur de configuration edge, d'informations sur un second serveur de configuration edge comprend (S110) :
l'envoi, par le premier serveur de configuration edge, de premières informations de demande à un élément de réseau de contrôle de fédération prenant en charge la découverte de serveur de configuration edge, dans lequel les premières informations de demande sont utilisées pour demander les informations sur le second serveur de configuration edge (S102) ; et
la réception, par le premier serveur de configuration edge, de premières informations de réponse provenant de l'élément de réseau de contrôle de fédération, dans lequel les premières informations de réponse comprennent des informations sur le second serveur de configuration edge (S103).

2. Procédé selon la revendication 1, dans lequel l'obtention, par le premier serveur de configuration edge, des informations sur un second serveur de configuration edge comprend :
l'obtention, par le premier serveur de configuration edge, des informations sur le second serveur de configuration edge sur la base des informations de configuration.

3. Procédé selon la revendication 1, dans lequel l'élément de réseau de contrôle de fédération stocke des informations sur au moins un serveur de configuration edge.

4. Procédé selon l'une quelconque des revendications 1 à 3, dans lequel avant l'envoi, par le premier serveur de configuration edge, de premières informations à un premier dispositif, le procédé comprend également :
l'envoi, par le premier serveur de configuration edge, de deuxièmes informations de demande au second serveur de configuration edge, dans lequel les deuxièmes informations de demande sont utilisées pour demander les informations sur le premier serveur d'activation edge (S104) ; et
la réception, par le premier serveur de configuration edge, de deuxièmes informations de réponse provenant du second serveur de configuration edge, dans lequel les deuxièmes informations de réponse comprennent les informations sur le premier serveur d'activation edge (S105).

5. Procédé selon l'une quelconque des revendications 1 à 4, dans lequel le procédé comprend également :
la réception, par le premier serveur de configuration edge, de troisièmes informations de demande provenant du premier dispositif, dans lequel les troisièmes informations de demande sont une demande de fourniture de service (S220) ; et
la détermination, par le premier serveur de configuration edge sur la base des troisièmes informations de demande, qu'un serveur d'activation edge géré par le premier serveur de configuration edge ne peut pas fournir un service edge au dispositif terminal (S230).

6. Procédé selon la revendication 5, dans lequel les troisièmes informations de demande comprennent des informations de localisation du dispositif terminal, et
dans lequel la détermination, par le premier serveur de configuration edge sur la base des troisièmes informations de demande, qu'un serveur d'activation edge géré par le premier serveur de configuration edge ne peut pas fournir un service edge au dispositif terminal comprend :
la détermination, par le premier serveur de configuration edge sur la base des informations de localisation du dispositif terminal, qu'un serveur d'activation edge géré par le premier serveur de configuration edge ne peut pas fournir un service edge au dispositif terminal.

7. Procédé selon la revendication 5 ou 6, dans lequel les troisièmes informations de demande comprennent au moins l'un des éléments suivants :
un identifiant d'un réseau mobile terrestre public PLMN auquel accède le dispositif terminal, un identifiant d'un fournisseur de services informatiques de pointe, des informations sur les fonctionnalités du premier serveur d'activation de pointe, et des informations sur l'application.

8. Procédé selon la revendication 1, comprenant également :
la réception, par l'élément de réseau de contrôle de fédération, des premières informations de demande (S251) ;
l'envoi, par l'élément de réseau de contrôle de fédération, des premières informations de réponse au premier serveur de configuration edge (S252).

9. Procédé selon la revendication 4, comprenant également :
la réception, par le second serveur de configuration edge, des deuxièmes informations de demande (S253) ;
la détermination, par le second serveur de configuration edge, des informations sur le premier serveur d'activation edge sur la base des deuxièmes informations de demande ; et
l'envoi, par le second serveur de configuration edge, des deuxièmes informations de réponse au second serveur de configuration edge (S254).

10. Procédé selon l'une quelconque des revendications 1 à 9, comprenant également :
la réception, par le premier dispositif, des premières informations (S120).

11. Procédé d'obtention d'un service edge selon la revendication 1, dans lequel le procédé comprend également :
la réception, par le second serveur de configuration edge, de deuxièmes informations de demande provenant du premier serveur de configuration edge, dans lequel les deuxièmes informations de demande sont utilisées par le premier serveur de configuration edge pour demander des informations sur un premier serveur d'activation edge au second serveur de configuration edge (S104) ;
la détermination, par le second serveur de configuration edge, des informations sur le premier serveur d'activation edge sur la base des deuxièmes informations de demande ; et
l'envoi, par le second serveur de configuration edge, de deuxièmes informations de réponse au premier serveur de configuration edge, dans lequel les deuxièmes informations de réponse comprennent les informations sur le premier serveur d'activation edge (S105).

12. Appareil de communication, comprenant un module configuré pour réaliser le procédé selon l'une quelconque des revendications 1 à 7.

13. Support de stockage lisible par ordinateur, dans lequel le support de stockage lisible par ordinateur est configuré pour stocker un programme informatique, et lorsque le programme informatique fonctionne sur un ordinateur, l'ordinateur est activé pour réaliser le procédé selon l'une quelconque des revendications 1 à 7.

14. Système, comprenant un premier serveur de configuration edge configuré pour réaliser le procédé selon les revendications 1 à 7 un élément de réseau de contrôle de fédération configuré pour réaliser le procédé selon la revendication 8, un second serveur de configuration edge configuré pour réaliser le procédé selon la revendication 9, et un premier dispositif configuré pour réaliser le procédé selon la revendication 10.
